# EUROPÄISCHE PATENTANMELDUNG

(11) **EP 3 667 601 A1**
(43) Veröffentlichungstag der Anmeldung: **17.06.2020**
(21) Anmeldenummer: 18212288.7
(22) Anmeldetag: 13.12.2018
(51) Int. Cl.: G06Q 30/06, G06Q 50/04

(54) **VERFAHREN, VORRICHTUNGEN UND SYSTEM ZUR BEREITSTELLUNG EINES LEISTUNGSGEGENSTANDES**

(71) Anmelder: Siemens Aktiengesellschaft, 80333 München (DE)
(72) Erfinder: JETZFELLNER, Thomas, 85609 Aschheim (DE); Sturm, Monika, 1190 Wien (AT)
(74) Vertreter: Maier, Daniel Oliver

(57) **Zusammenfassung**

Die Erfindung betrifft ein Ökosystem von Geräten, die mittels einer Blockkette miteinander autonom interagieren. Die Geräte sind vorzugsweise mittels der Blockketteninfrastruktur kommunikativ miteinander gekoppelt/verbunden. Dabei können Sendevorrichtungen Sensordaten oder Betriebsmodi eines Gerätes in Form eines Leistungsgegenstandes bereitstellen, wobei die Sendevorrichtung die Verwendung des Leistungsgegenstandes mittels Verwendungsparameter steuert. Die Blockketteninfrastruktur der Blockkette erlaubt dabei insbesondere die Einhaltung dieser Verwendungsparameter dezentral sicherzustellen, indem z. B. ein Datensteuerrahmen die Einhaltung der Verwendungsparameter überwacht.

## Beschreibung

Die Erfindung bezieht sich auf Verfahren, Vorrichtungen und ein System zur Bereitstellung eines Leistungsgegenstandes.

Eine immer stärkere Vernetzung von Smart-Geräten (z. B. Mobiltelefonen, Smartwatches) führt dazu, dass mehr und mehr Sensordaten von diesen Smart-Geräten erfasst wird.

Nachfolgend werden einige Aspekte der Erfindung erläutert.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung eine Sendevorrichtung zum Bereitstellen eines Leistungsgegenstands umfassend:
- ein Kodierungsmodul, wobei
   - das Kodierungsmodul dazu eingerichtet ist Verwendungsparameter für den Leistungsgegenstand zu erzeugen,
- ein Steuermodul (120), wobei
   - das Steuermodul dazu eingerichtet ist einen Datensteuerrahmen zu erzeugen und/oder zu konfigurieren,
   - der Datensteuerrahmen den Leistungsgegenstand umfasst,
   - eine Verwendbarkeit des Leistungsgegenstands mittels eines Zugriffschutzes durch den Datensteuerrahmen gesteuert wird;
   - der Datensteuerrahmen den Verwendungsparameter umfasst, wobei die Verwendungsparameter angeben wann der Zugriffschutz zur Verwendung des Leistungsgegenstands aufgehoben wird;
- eine erste Datenschnittstelle (130), wobei
   - die erste Datenschnittstelle den Datensteuerrahmen sendet,
   - der Datensteuerrahmen beispielsweise an ein verteiltes Datenbanksystem gesendet wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw.

Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden. Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion (des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1] [4] [5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Entsprechend kann beispielsweise ein Peer-2-Peer Kommunikationsprotokoll anstelle des verteilten Datenbanksystems genutzt werden. Dabei sind z. B. die genannten Nachrichten/Transaktionen des verteilten Datenbanksystems entsprechende Nachrichten des Peer-2-Peer Kommunikationsprotokolls bzw. die jeweiligen Daten werden in entsprechenden Nachrichten gespeichert. Dabei ist beispielsweise unter einem Speichern der Transaktionen in dem verteilten Datenbanksystem ein Übergeben einer entsprechenden Nachricht an die Peer-2-Peer Kommunikationsinfrastruktur, die das Peer-2-Peer Kommunikationsprotokoll implementiert, zu verstehen. Auch kann beispielsweise hierfür bzw. anstelle des verteilten Datenbanksystems eine Peer-2-Peer Schnittstelle oder eine Peer-2-Peer Applikation genutzt werden, um die entsprechenden Transaktionen bzw. Nachrichten zu speichern und/oder zu übermitteln.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1] [4] [5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server verstanden werden, die jeweils außerhalb der Blockkette angeordnet sind und kein Teil der Infrastruktur des verteilten Datenbanksystems sind bzw. eine separate getrennte Infrastruktur bilden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage direkt mit dem verteilten Datenbanksystem (direkt) zu kommunizieren.

Unter "Verwendungsparameter" können im Zusammenhang mit der Erfindung beispielsweise Schwellwerte, Wertebereiche, Zeiträume, Zeitpunkte, Positionsvorgaben (z. B. Verwendungsorte) oder eine Kombination aus den hier oder später genannten Daten (z. B. weitere Beispiele für Verwendungsparameter) verstanden werden. Die Verwendungsparameter werden beispielsweise durch die Sendevorrichtung festgelegt bzw. von dieser vorgegeben. Die Verwendungsparameter geben beispielsweise mit den entsprechenden Werten an, dass z. B. diese Verwendungsparameter für eine Nutzung des Leistungsgegenstandes eingehalten werden sollen. Beispielsweise sollen Sensordaten nicht nach Ablauf eines vorgegebenen Nutzungszeitraums verwendet werden.

Unter "Leistungsparameter" können im Zusammenhang mit der Erfindung beispielsweise Schwellwerte, Wertebereiche, Zeiträume, Zeitpunkte, Positionsvorgaben (z. B. Verwendungsorte) oder eine Kombination aus den hier oder später genannten Daten (z. B. weitere Beispiele für Leistungsparameter) verstanden werden. Die Leistungsparameter werden beispielsweise durch die die Verarbeitungsvorrichtung anhand von weiteren Verwendungsparametern eines Leistungsempfängers ermittelt. Die Leistungsparameter geben beispielsweise mit den entsprechenden Werten an, unter welchen Bedingungen bzw. Wertebereichen der Leistungsgegenstand genutzt wird. Beispielsweise werden Sensordaten nur 10 Tage genutzt, wobei der Ablauf des vorgegebenen Nutzungszeitraums der Verwendungsparameter 30 Tage ist. Mit anderen Worten geben beispielsweise die Verwendungsparameter eine Reihe von Nutzungsmöglichkeiten für den Leistungsgegenstand vor und die Leistungsparameter sind dabei eine konkret ausgewählte Nutzungsmöglichkeit des Leistungsgegenstandes, wobei Leistungsparameter insbesondere nicht die Verwendungsparameter überschreiten können. Vorteilhaft ist dabei, dass z. B. mittels des Datensteuerrahmens und beispielsweise einer Blockketteninfrastruktur die Einhaltung dieser Leistungsparameter und/oder Verwendungsparameter automatisiert realisiert wird. Beispielsweise können die Leistungsparameter einen Erbringungsort (z. B. eine geographische Position/GPS-Position, eine Netzwerkadresse, eine IP-Adresse, ein Domainname oder eine Kombination aus den genannten Möglichkeiten) vorgeben zudem der Leistungsgegenstand übermittelt wird. Der Erbringungsort kann beispielsweise auch einem Leistungsempfänger übermittelt werden, nachdem dieser z. B. eine Gegenleistung erbracht hat oder eine Nachricht mit einer Bestätigung des Erbringens der Gegenleistung z. B. an die Verarbeitungsvorrichtung und/oder dem Datensteuerrahmen überbracht hat. Die Gegenleistung kann beispielsweise das Bereitstellen von Sensordaten sein, anhand deren der Datensteuerrahmen überprüfen kann, ob die Leistungsparameter und/oder Verwendungsparameter eingehalten sind.

Unter "Datensteuerrahmen" kann im Zusammenhang mit der Erfindung beispielsweise ein Smart-Contract oder ein ausführbarer Programmcode verstanden werden. Bei einem Datensteuerrahmen kann es sich beispielsweise auch um ein Modul mit einem Prozessor und/oder Speichereinheit handeln, die entsprechende Funktionen implementieren. Beispielsweise kann der Datensteuerrahmen eine Adresse (z. B. Speicheradresse, Netzwerkadresse, IP-Adresse, Blocknummer einer Blockkette, die den Datensteuerrahmen speichert) und/oder einen eindeutigen Identifizierer und/oder eine Datenschnittstelle umfassen, wobei mittels dieser Adresse und/oder diesem eindeutigen Identifizierer und/oder dieser Datenschnittstelle mit dem Datensteuerrahmen kommuniziert werden kann. Hierdurch kann beispielsweise ein Leistungsempfänger mit dem Datensteuerrahmen direkt kommunizieren und diesem z. B. Sensordaten übermitteln oder einen Zugriff auf Sensoren gewähren, sodass der Datensteuerrahmen die Einhaltung von Leistungsparameter und/oder Verwendungsparametern überprüfen kann.

Mit der Erfindung ist es insbesondere möglich eine dezentrale (blockkettenbasierte) Infrastruktur mit Sendevorrichtungen, die beispielsweise als Gerät (z. B. mit einem Sensor oder mehreren Sensoren) ausgestaltet sein können, zu realisieren. Die Geräte können beispielsweise bewegliche Geräte z. B. mit einem Sensor sein, wobei der Leistungsgegenstand beispielsweise die Sensordaten sind, die z. B. an unterschiedlichen Orten bei der Bewegung des Gerätes erfasst wurden. Entsprechende Ortsdaten können beispielsweise in den später erläuterten Leistungsgegenstandseigenschaften gespeichert sein. Bei dem Gerät kann es sich beispielsweise um ein Fahrzeug mit einem oder mehreren Sensoren handeln, wobei das Gerät bzw. das Fahrzeug beispielsweise die Messwerte über eine Niederschlagsmenge (z. B. Regensensoren) misst. Es können beispielsweise auch weitere Messwerte erfasst werden, wie z. B. GPS Position, Uhrzeit, Helligkeit, Temperatur, Luftfeuchtigkeit. Entsprechend kann es sich beispielsweise bei mehreren Sensoren um Sensoren handeln, die unterschiedliche Messgrößen erfassen.

Mit der Erfindung kann insbesondere ein Leistungsgegenstand, bei dem es sich beispielsweise um Sensordaten handelt, derart bereitgestellt werden, dass z. B. die vorgegebenen Rahmenbedingungen der Verwendung der Sensordaten eingehalten werden. Die Rahmenbedingungen werden vorzugsweise durch die Verwendungsparameter kodiert. Dies kann beispielsweise ein Verwendungszeitraum sein oder ein konkretes Ablaufdatum für eine Verwendung. Alternativ oder zusätzlich können z. B. auch ein Verwendungsort oder ein bestimmter Verwendungszweck durch die Verwendungsparameter vorgegeben sein. Mittels des Datensteuerrahmes wird vorzugsweise überprüft, ob bei einer Verwendung des Leistungsgegenstandes die Verwendungsparameter eingehalten werden. Beispielsweise wird der Datensteuerrahmen in einem Datensatz (z. B. eine Transaktion, die vorzugsweise durch die Sendevorrichtung digital signiert wird) gespeichert und dieser vorzugsweise an eine Verarbeitungsvorrichtung wie ein verteiltes Datenbanksystem (z. B. eine Blockkette) übertragen. Der Datensteuerrahmen kann beispielsweise als Smart-Contract realisiert werden oder anhand des Datensteuerrahmens wird ein oder mehrere Smart-Contracts (z. B. ausführbarer Programmcode bzw. Programmbefehle) erzeugt, die z. B. zusammen mit dem Datensatz (z. B. als Transaktion) in der Verarbeitungsvorrichtung gespeichert werden und vorzugsweise von der Verarbeitungsvorrichtung verwaltet werden. Wird beispielsweise die Verarbeitungsvorrichtung als Blockkette realisiert, so kann der Datensatz mit dem Datensteuerrahmen (also insbesondere auch der Leistungsgegenstand oder einen Verweis/Link auf den Leistungsgegenstand und den Verwendungsrahmen) z. B. in einem Block der Blockkette oder einer Transaktion der Blockkette (z. B. blockless distributed ledger) gespeichert werden. Zusätzlich können beispielsweise bei diesem Speichern die entsprechenden Smart-Contracts ebenfalls durch die Verarbeitungsvorrichtung bzw. die Blockkette gespeichert werden. Mit dem Datensteuerrahmen (z. B. dem entsprechenden Smart-Contract der den Datensteuerrahmen realisiert) wird beispielsweise überprüft, ob die Verwendungsparameter bei einer Verwendung des Leistungsgegenstandes eingehalten werden. Stellt beispielsweise der Datensteuerrahmen eine Überschreitung der Verwendungsparameter fest, so wird der Zugriffsschutz des Datensteuerrahmes derart angesteuert, dass ein Zugriff auf den Leistungsgegenstand unterbunden wird. Der Zugriffsschutz kann hierbei beispielsweise als ein kryptographischer Schutz implementiert sein. Alternativ oder zusätzlich kann der Zugriffsschutz z. B. dadurch implementiert werden, in dem z. B. das Unterbinden durch ein Abschalten einer Datenschnittstelle für den Zugriff auf den Leistungsgegenstand erfolgt und/oder z. B. das Aufheben des Zugriffschutzes durch ein Einschalten einer Datenschnittstelle beim Einhalten der Verwendungsparameter erfolgt. Alternativ oder zusätzlich kann der Zugriffsschutz z. B. dadurch implementiert werden, in dem z. B. beim Unterbinden ein Löschen eines Links/Verweises auf den Leistungsgegenstand erfolgt und/oder z. B. das Aufheben des Zugriffschutzes durch ein Bereitstellen eines Links/Verweises auf den Leistungsgegenstand erfolgt.

Der kryptographische Schutz kann beispielsweise durch eine Verschlüsselung realisiert sein, die für den Leistungsgegenstand aufgehoben wird, wenn ein Leistungsempfänger bzw. die Verwendung des Leistungsgegenstandes die Verwendungsparameter einhält. Der Zugriff auf den Leistungsgegenstand kann beispielsweise nach Ablauf des Verwendungszeitraum oder des Ablaufdatum für die Verwendung dadurch unterbunden werden, dass der Leistungsgegenstand nicht mehr entschlüsselt wird. Vorteilhaft ist hierbei, dass beispielsweise durch das Speichern und/oder Verwalten des Datensteuerrahmens mittels einer Blockkette sichergestellt wird, dass der Leistungsgegenstand so verwendet wird, wie dies die Verwendungsparameter vorgeben, wobei vorzugsweise der Datensteuerrahmen und/oder der Verwendungsrahmen und/oder der Leistungsgegenstand manipulationsgeschützt durch das verteilte Datenbanksystem bzw. die Blockkette gespeichert werden.

Bei dem Leistungsgegenstand kann es sich beispielsweise auch um ein physikalisches Objekt handeln, das über den Leistungsgegenstand verwaltet wird. Bei dem physikalischen Objekt kann es sich beispielsweise um ein Gerät, ein elektrisches Bauteil, ein elektronisches Bauteil, ein elektromechanisches Bauteil, ein mechatronisches Bauteil, Waren, Bauteile, Generatoren, Kraftwerksteile (z. B. Windturbinen, Gasturbinen), Wasser, einen Betriebsmoduls für ein Gerät, Elektrizität oder Öl handeln, die z. B. über eine einen eindeutigen Identifizierer (UID) mit dem Leistungsgegenstand des Datensteuerrahems verknüpft bzw. diesen zugeordnet sind. Bei diesen physikalischen Objekten kann ein Zugriffsschutz beispielsweise dadurch realisiert werden, indem das physikalische Objekt den Datensteuerrahmen umfasst (z. B. als elektronisches Bauteil bzw. Modul ausgebildet) oder die Sendevorrichtung umfasst. Alternativ oder zusätzlich umfasst das physikalische Objekt eine Verarbeitungsvorrichtung (wird auf den nachfolgenden Seiten genauer erläutert) oder ist zumindest als ein Teil (z. B. Knoten) der Verarbeitungsvorrichtung ausgebildet. Der Zugriffschutz wird z. B. dadurch realisiert, dass der Leistungsgegenstand (z. B. eine Gasturbine oder eine Windturbine) beim Überschreiten der Verwendungsparameter ausgeschaltet wird.

Wird beispielsweise durch die Verwendungsparameter ein vorgegebener Temperaturbereich für einen Betrieb einer Gasturbine vorgegeben, so kann diese Gasturbine vorzugsweise automatisiert bei einem Überschreiten des vorgegebenen Temperaturbereiches durch den Datensteuerrahmen die Gasturbine abgeschaltet werden und deren weiterer Betrieb unterbunden werden. Dabei ist vorteilhaft, dass z. B. bei einer Realisierung des Datensteuerrahmens mittels eines Smart-Contracts dieser von keiner Partei geändert werden kann, nachdem dieser einmal festgelegt wurde und in einem verteilten Datenbanksystem bzw. einer Blockkette gespeichert wurde. Insbesondere kann dabei die Blockkette bzw. das verteilte Datensystem die Ausführung des Datensteuerrahmens bzw. des Smart-Contracts steuern und dadurch auch eine manipulationssichere Steuerung mittels des Datensteuerrahmens realisieren.

Bei einer ersten Ausführungsform der Sendevorrichtung sind Leistungsgegenstandseigenschaften über den Leistungsgegenstand in einem Verwendungsrahmen und/oder den Verwendungsparametern und/oder dem Datensteuerrahmen gespeichert, wobei beispielsweise der Datensteuerrahmen den Verwendungsrahmen umfasst und beispielsweise der Verwendungsrahmen die Verwendungsparameter umfasst.

Die Sendevorrichtung ist dahingehend vorteilhaft, um insbesondere mittels der Leistungsgegenstandeigenschaften Eigenschaften über den Leistungsgegenstand zu speichern. Dies können z. B. im Falle eines Sensors die erfasste Messgröße, Position, SNR, Abtastrate, Sensortyp (z. B. piezoelektrischer Sensor, CCD Sensor) oder ein Erzeugungsort des Leistungsgegenstandes sein. Alternativ kann es sich z. B. hierbei um Leistungsgegenstandeigenschaften zu einem physikalischen Objekt handeln. Diese Leistungsgegenstandeigenschaften können z. B. geographische Lage des physikalischen Objektes (z. B. GPS Daten), Angaben zum Herstellungsmaterial (z. B. Angaben aus welcher Legierung ein mechanisches Bauteil gefertigt ist), Angaben zur Verwendbarkeit von dem physikalischen Objekt (z. B. was ist die maximale Leistung die durch eine Turbine in einer Stunde erzeugt werden kann). Die Verwendungsparameter geben dann vorzugsweise an, dass z. B. ein Motor vorgegebene Drehzahlen nicht überschreiten darf oder es ist ein Überschreiten einer vorgegebenen Drehzahl nur erlaubt, wenn bestimmte Parameter der Verwendungsparameter eingehalten sind (z. B. es wird zusätzlicher Treibstoff bereit gestellt, zusätzliche Wartung ist z. B. über einen vorhandenen Wartungsvertrag gewährleistet). Das Vorhandensein z. B. eines Wartungsvertrages mit entsprechenden Wartungsintervallen kann beispielsweise auch über das verteilte Datenbanksystem bzw. einer Blockkette realisiert bzw. organisiert sein, indem z. B. der Vertrag und die entsprechenden Bestätigungen für die Wartungsarbeiten ebenfalls in dem verteilten Datenbanksystem bzw. der Blockkette gespeichert und/oder verwaltet werden.

Bei weiteren Ausführungsformen der Sendevorrichtung ist die Sendevorrichtung ein Knoten eines verteilten Datenbanksystems, wobei beispielsweise der Verwendungsrahmen und/oder der Datensteuerrahmen ein Smart-Contract ist und/oder beispielsweise ein Empfänger beim Senden des Datensteuerrahmens ein verteiltes Datenbanksystem oder ein Knoten eines verteilten Datenbanksystems ist.

Bei weiteren Ausführungsformen der Sendevorrichtung umfasst die Sendevorrichtung einen Sensor und der Leistungsgegenstand sind Sensordaten, wobei insbesondere Leistungsgegenstandeigenschaften über die Sensordaten in dem Verwendungsrahmen und/oder den Verwendungsparametern und/oder dem Datensteuerrahmen gespeichert sind.

Bei weiteren Ausführungsformen der Sendevorrichtung umfassen der Verwendungsrahmen und/oder die Verwendungsparametern und/oder der Datensteuerrahmen einen Erzeugungsort des Leistungsgegenstands und/oder einen Zielort zur Entnahme des Leistungsgegenstands.

Die Sendevorrichtung ist dahingehend vorteilhaft, um insbesondere festzustellen oder festzulegen wo eine Leistungserbringung erfolgt und wo der Leistungsgegenstand erzeugt wurde. Dies ist beispielsweise vorteilhaft, um zu vermeiden dass ein Leistungsgegenstand aus einer Region verwendet wird, der Beschränkungen unterliegt (z. B. Handelsbeschränkungen oder Handelsembargos).

Gemäß einem weiteren Aspekt betrifft die Erfindung eine Verarbeitungsvorrichtung umfassend:
- eine zweite Datenschnittstelle, wobei
   - die zweite Datenschnittstelle einen Datensteuerrahmen empfängt,
   - der Datensteuerrahmen einen Leistungsgegenstand umfasst,
   - eine Verwendbarkeit des Leistungsgegenstands mittels eines Zugriffsschutzes durch den Datensteuerrahmen gesteuert wird,
   - der Datensteuerrahmen Verwendungsparameter über eine Verwendung des Leistungsgegenstandes umfasst,
   - die Verwendungsparameter angeben wann der Zugriffsschutz zur Verwendung des Leistungsgegenstands aufgehoben wird;
- ein Speichermodul, wobei
   - das Speichermodul dazu eingerichtet ist den Datensteuerrahmen in einem Datenbanksystem zu speichern,
   - der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
   - beispielsweise der Datensteuerrahmen dazu eingerichtet ist den Zugriffsschutz abhängig von einem Prüfergebnis über die Einhaltung der der Verwendungsparameter aufzuheben.

Vorzugsweise ist der Leistungsgegenstand solange durch den Zugriffschutz zugriffsgeschützt, bis eine Einhaltung der Verwendungsparameter durch den Datensteuerrahmen wurde. Die Verarbeitungsvorrichtung ist beispielsweise dahingehend vorteilhaft um die Verwendung des Leistungsgegenstandes entsprechend der Verwendungsparameter mittels des Datensteuerrahmens sicherzustellen.

Bei weiteren Ausführungsformen der Verarbeitungsvorrichtung umfasst die Verarbeitungsvorrichtung ein Leistungserbringungsmodul, wobei
- beispielsweise eine Leistungserbringungsnachricht an einen Leistungsempfänger übermittelt wird, wenn beispielsweise eine zu erbringende Leistung vom Leistungsempfänger erbracht wurde, und
- beispielsweise der Zugriffsschutz nach Erbringung der Leistung durch den Datensteuerrahmen aufgehoben wird und der Datensteuerrahmen an den Leistungsempfänger übermittelt wird.

Die Verarbeitungsvorrichtung ist dahingehend vorteilhaft, um beispielsweise den Leistungsgegenstand einem Leistungsempfänger bereitzustellen, wenn dieser z. B. eine für die Leistungserbringung erforderliche Leistung (nachweislich) erbracht hat. Beispielsweise wird der Leistungsgegenstand nur erbracht, wenn der Leistungsempfänger über entsprechende Wartungsverträge verfügt, die eine adäquate Wartung für den Leistungsgegenstand garantieren. Alternativ oder zusätzlich wird der Leistungsgegenstand erbracht, wenn z. B. eine von der Sendevorrichtung und/oder Verarbeitungsvorrichtung ermittelte zu erbringende Leistung für den Leistungsgegenstand durch den Leistungsempfänger erbracht wurde. Alternativ oder zusätzlich entspricht die erbrachte Leistung bzw. die zu erbringende Leistung einem zu zahlenden Geldbetrag. Ist beispielsweise der Geldbetrag überwiesen, wird die Leistungserbringungsnachricht durch die Verarbeitungsvorrichtung/Leistungserbringungsmodul an den Leistungsempfänger übermittelt.

Bei weiteren Ausführungsformen der Verarbeitungsvorrichtung umfasst die Verarbeitungsvorrichtung ein Bereitstellungsmodul, wobei das Bereitstellungsmodul dazu eingerichtet ist Informationen über den Leistungsgegenstand und/oder den Verwendungsrahmen und/oder Leistungsgegenstandseigenschaften bereitzustellen.

Bei weiteren Ausführungsformen der Verarbeitungsvorrichtung umfasst die Verarbeitungsvorrichtung ein Anfrageverarbeitungsmodul, wobei
- das Anfrageverarbeitungsmodul eine Anfragenachricht mit einer Anfrage zur Erbringung einer Gegenleistung und/oder weiteren Verwendungsparametern von dem Leistungsempfänger empfängt,
- das Anfrageverarbeitungsmodul überprüft, ob die Anfrage die Verwendungsparameter und/oder die Gegenleistung und/oder die weiteren Verwendungsparameter im dem abänderbaren Bereich einhält;
- das Bestimmungsmodul bei der Berechnung der zu erbringenden Leistung das Ergebnis des Überprüfens der durch das Anfrageverarbeitungsmodul berücksichtigt.

Bei weiteren Ausführungsformen der Verarbeitungsvorrichtung umfasst die Verarbeitungsvorrichtung ein Bestimmungsmodul, wobei
- beispielsweise das Bestimmungsmodul für einen Leistungsempfänger eine zu erbringende Leistung für eine Verwendung des Leistungsgegenstandes ermittelt,
- beispielsweise die zu erbringende Leistung anhand der vom Leistungsempfänger angegebene Verwendung unter Berücksichtigung der Verwendungsparameter und des abänderbaren Bereichs der Gegenleistung und/oder der weiteren Verwendungsparamter berechnet wird.

Bei weiteren Ausführungsformen der Verarbeitungsvorrichtung berücksichtigt das Bestimmungsmodul bei der Berechnung der zu erbringenden Leistung das Ergebnis des Überprüfens, das durch das Anfrageverarbeitungsmodul ermittelt wurde.

Die Verarbeitungsvorrichtung ist dahingehend vorteilhaft, um beispielsweise einem Leistungsempfänger mittels des Bereitstellungsmodul zu ermöglichen Informationen über den Leistungsgegenstand und/oder die Gegenleistung und/oder die Verwendungsparameter und/oder Leistungsgegenstandseigenschaften und/oder den Datensteuerrahmen zu erhalten. Hierzu umfassen vorzugsweise die bereitgestellten Informationen die Gegenleistung und/oder die Verwendungsparameter und/oder Leistungsgegenstandseigenschaften und/oder den Datensteuerrahmen und/oder eine zu erbringende Leistung für den Leistungsgegenstand, die z. B. mittels dem Bereitstellungsmodul und/oder einem Kommunikationsmodul vorzugsweise dem Leistungsempfänger bereitgestellt werden.

Anhand dieser Informationen kann beispielsweise der Leistungsempfänger weitere Verwendungsparameter erzeugen und z. B. an die Verarbeitungsvorrichtung mittels der Anfragenachricht übermitteln.

Diese Anfragenachricht wird Anfrageverarbeitungsmodul verarbeitet.

Das Bestimmungsmodul berechnet dann eine zu beringende Leistung anhand der weiteren Verwendungsparameter des Leistungsempfängers. Überschreiten beispielsweise die weiteren Verwendungsparameter des Leistungsempfängers nicht die Verwendungsparameter für den Leistungsgegenstand so kann beispielsweise die Verarbeitungsvorrichtung bzw. das Bestimmungsmodul anhand dieser Daten die vom Leistungsempfänger zu erbringende Leistung berechnen, wenn der Leistungsempfänger den Leistungsgegenstand entsprechend der weiteren Verwendungsparameter verwenden möchte.

Beispielsweise können die Verwendungsparameter des Leistungsgegenstandes vorgeben, welche Gegenleistung für die Verwendung des Leistungsgegenstanden erfüllt sein muss. Es kann z. B. vorgegeben sein, dass der Leistungsgegenstand maximal 12 Monate für einen Preis von 10000 € (die Gegenleistung) verwendet werden kann. Beispielsweise hat der Leistungsempfänger in seinen weiteren Verwendungsparametern angegeben, dass eine Verwendung für 6 Monate erfolgen soll. Die Verwendungsparameter (die vom der Verarbeitungsvorrichtung empfangen wurden) kodieren hierbei beispielsweise Regeln oder Angaben in welchem Bereich eine Gegenleistung und/oder die Verwendungsparameter abgeändert werden können. Im genannten Beispiel kann z. B. noch vorgegeben sein, dass der Leistungsgegenstand mindestens einen vorgegebenen Zeitraum genutzt werden muss (z. B. für 6 Monate). Anhand dieser Angaben wird z. B. ein Preis für 6 Monate bestimmt. Dieser kann z. B. in diesem Beispiel dann 5000 € betragen, da der Leistungsgegenstand nur die Hälfte der Zeit genutzt wird. Über eine Steuernachricht wird der Leistungsempfänger über die ermittelte und die zu erbringende Leistung (z. B. 5000 € Nutzungsgebühr für 6 Monate Verwendung des Leistungsgegenstandes) informiert. Hierzu wird vorzugsweise diese Steuernachricht mit der zu erbringenden Leistung an den Leistungsempfänger übermittelt. Dies kann z. B. als Transaktion des verteilten Datenbanksystems realisiert sein, wenn der Leistungsempfänger z. B. ein Knoten des verteilten Datenbanksystems ist oder einen Zugriff auf eine Schnittstelle des verteilten Datenbanksystems hat. Alternativ überwacht der Datensteuerrahmen die Einhaltung der Verwendungsparameter z. B., dass der Leistungsgegenstand nur in einem bestimmten vorgegeben Land verwendet werden darf oder, dass z. B. der Leistungsgegenstand nicht länger als die vorgegebene maximale Nutzungszeit verwendet wird. Eine Nutzungsgebühr ist beispielsweise nicht zwangsläufig erforderlich, wie in den Ausführungsbeispielen später erläutert.

Beispielsweise werden diese ermittelten Parameter (z. B. als Leistungsparameter bezeichnet) für die Nutzung des Leistungsgegenstandes durch den Leistungsempfänger im Datensteuerrahmen oder einem weiteren Datensteuerrahmen, der den vom der Verarbeitungsvorrichtung empfangenen Datensteuerrahmen Umfasst oder auf diesen verweist, gespeichert. Der Datensteuerrahmen und/oder der weitere Datensteuerrahmen heben dann ggf. den Zugriffsschutz für den Leistungsgegenstand auf, solange die Leistungsparameter (z. B. analog zu den Verwendungsparametern) erfüllt sind. Bezogen auf das genannte Beispiel würden z. B. nach Ablauf der 6 Monate, die z. B. in den Leistungsparametern kodiert bzw. gespeichert sind, mittels des Zugriffsschutzes des Datensteuerrahmens und/oder des weitere Datensteuerrahmens ein Zugriff auf den Leistungsgegenstand unterbunden werden. Beispielsweise kann der weitere Datensteuerrahmen analog zu dem von der Verarbeitungsvorrichtung empfangenen Datensteuerrahmen implementiert sein (z. B. als Smart-Contract einer Blockkette). Vorzugsweise wird hierdurch ein zweistufiger Zugriffsschutz realisiert indem der Datensteuerrahmen (der von der Verarbeitungsvorrichtung) die Verwendungsparameter überprüft, ob die Verwendungsparameter eingehalten werden und indem der weiteren Datensteuerrahmen die Leistungsparameter überprüft, ob diese eingehalten sind. Abhängig von dem jeweiligen Prüfergebnis kann beispielsweise der Zugriffsschutz für den jeweiligen Datensteuerrahmen aufgehoben oder eingeschaltet bzw. durchgeführt werden. Alternativ kann beispielsweise ein gemeinsamer Zugriffsschutz von beiden Datensteuerrahmen abhängig von dem Ergebnis der jeweiligen Einzelprüfung eines Datensteuerrahmens aufgehoben werden, wenn die Verwendungsparameter und die Leistungsparameter erfüllt sind. Vorzugsweise ist der Leistungsgegenstand solange durch den Zugriffschutz zugriffsgeschützt, bis eine Einhaltung der Leistungsparameter und der Verwendungsparameter durch die jeweiligen Datensteuerrahmen bestätigt wurde.

Bei weiteren Ausführungsformen der Verarbeitungsvorrichtung ist der Leistungsempfänger ein Knoten eines verteilten Datenbanksystems, und/oder
- die Verarbeitungsvorrichtung ist durch einen oder mehreren Knoten eines verteilten Datenbanksystems realisiert, und/oder
- der Leistungsgegenstand sind Sensordaten.

Bei weiteren Ausführungsformen der Verarbeitungsvorrichtung wird die zu erbringende Leistung mittels eines Smart-Contracts ermittelt.

Gemäß einem weiteren Aspekt betrifft die Erfindung einen Leistungsempfänger umfassend:
- ein Kommunikationsmodul, wobei
   - das Kommunikationsmodul dazu eingerichtet ist Informationen über einen Leistungsgegenstand und/oder einen Verwendungsrahmen zu empfangen,
   - ein Bereitstellen des Leistungsgegenstandes für den Leistungsempfänger mittels einer Anfragenachricht und einer Steuernachricht gesteuert wird;
- ein Leistungsempfangsmodul, wobei
   - das Leistungsempfangsmodul einen Datensteuerrahmen empfängt,
   - der Datensteuerrahmen den Leistungsgegenstand umfasst,
   - eine Verwendbarkeit des Leistungsgegenstands mittels eines Zugriffsschutzes durch den Datensteuerrahmen gesteuert wird,
   - der Datensteuerrahmen Verwendungsparameter über eine Verwendung des Leistungsgegenstandes umfasst,
   - die Verwendungsparameter angeben wann der Zugriffsschutz zur Verwendung des Leistungsgegenstands aufgehoben wird;

Der Leistungsempfänger ist beispielsweise dahingehend vorteilhaft um die Verwendung des Leistungsgegenstandes entsprechend der Verwendungsparameter mittels des Datensteuerrahmens sicherzustellen. Hierzu wird beispielsweise der Zugriffsschutz für einen Zugriff auf den Leistungsgegenstand durch den Datensteuerrahmen (und/oder einem weiteren Steuerrahmen) aufgehoben, wenn die Verwendung des Leistungsgegenstandes entsprechend von Leistungsparameter und/oder der Verwendungsparameter erfolgt.

Bei weiteren Ausführungsformen des Leistungsempfängers umfasst der Leistungsempfänger ein Berechnungsmodul, wobei das Berechnungsmodul dazu eingerichtet ist anhand der Informationen über den Leistungsgegenstand weitere Verwendungsparameter zu berechnen und mittels des Kommunikationsmoduls als die Anfragenachricht zu senden.

Bei weiteren Ausführungsformen des Leistungsempfängers umfasst der Leistungsempfänger ein Leistungserbringungsmodul, wobei
- das Leistungserbringungsmodul dazu eingerichtet ist mittels des Kommunikationsmoduls die Steuernachricht als Antwort auf die Anfragenachricht zu empfangen,
- die Steuernachricht eine zu erbringende Leistung für die Verwendung des Leistungsgegenstandes entsprechend der weiteren Leistungsparameter umfasst,
- beispielsweise das Leistungserbringungsmodul die zu erbringende Leistung erbringt.

Bei weiteren Ausführungsformen der Verarbeitungsvorrichtung oder bei weiteren Ausführungsformen der Sendevorrichtung oder bei weiteren Ausführungsformen des Leistungsempfängers
- wird der Datensteuerrahmen von der Sendevorrichtung mittels Transaktionen eines verteilten Datenbanksystems z. B. an die Verarbeitungsvorrichtung übermittelt, und/oder
- wird der Datensteuerrahmen durch das Speichermodul der Verarbeitungsvorrichtung in einem/dem verteilten Datenbanksystem gespeichert, und/oder
- wird eine Referenz zu dem Datensteuerrahmen durch das Speichermodul der Verarbeitungsvorrichtung in einem/dem verteilten Datenbanksystem gespeichert, und/oder
- wird die Leistungserbringungsnachricht als Transaktion z. B. als Transaktion eines/des verteilten Datenbanksystems, an den Leistungsempfänger übermittelt, und/oder
- die Anfragenachricht als Transaktion, z. B. als Transaktion eines/des verteilten Datenbanksystems, an die Verarbeitungsvorrichtung übermittelt wird, und/oder
- die Steuernachricht als Transaktion, z. B. als Transaktion eines/des verteilten Datenbanksystems, an den Leistungsempfänger übermittelt wird, und/oder
- ist beispielsweise ein entsprechendes verteiltes Datenbanksystems als Blockkette realisiert und wobei die Transaktionen beispielsweise in Datenblöcken des verteilten Datenbanksystems oder der Blockkette vorzugsweise nach erfolgreicher Validierung gespeichert werden.

Gemäß einem weiteren Aspekt betrifft die Erfindung ein System umfassend:
- beispielsweise eine erfindungsgemäße Sendevorrichtung bzw. eine Sendevorrichtung nach einer der genannten Ausführungsformen;
- beispielsweise eine erfindungsgemäße Verarbeitungsvorrichtung bzw. eine Verarbeitungsvorrichtung nach einer der genannten Ausführungsformen.

Gemäß einem weiteren Aspekt betrifft die Erfindung ein Verfahren zum rechnergestützten Senden mit folgenden Verfahrensschritten:
- Erzeugen von Verwendungsparametern für den Leistungsgegenstand,
- Konfigurieren und/oder Erzeugen eines Datensteuerrahmens, wobei
   - der Datensteuerrahmen den Leistungsgegenstand umfasst,
   - eine Verwendbarkeit des Leistungsgegenstands mittels eines Zugriffschutzes durch den Datensteuerrahmen gesteuert wird;
   - der Datensteuerrahmen die Verwendungsparameter umfasst, wobei die Verwendungsparameter angeben wann der Zugriffschutz zur Verwendung des Leistungsgegenstands aufgehoben wird;
- Senden des Datensteuerrahmens.

Bei weiteren Ausführungsformen des Verfahrens umfasst das Verfahren weitere Verfahrensschritte, um die funktionalen Merkmale oder um weitere Merkmale der Sendevorrichtung bzw. deren Ausführungsformen zu realisieren.

Gemäß einem weiteren Aspekt betrifft die Erfindung ein Verfahren zum rechnergestützten Verarbeiten mit folgenden Verfahrensschritten:
- Empfangen eines Datensteuerrahmens,
   - der Datensteuerrahmen einen Leistungsgegenstand umfasst,
   - eine Verwendbarkeit des Leistungsgegenstands mittels eines Zugriffsschutzes durch den Datensteuerrahmen gesteuert wird,
   - der Datensteuerrahmen Verwendungsparameter über eine Verwendung des Leistungsgegenstandes umfasst,
   - die Verwendungsparameter angeben wann der Zugriffsschutz zur Verwendung des Leistungsgegenstands aufgehoben wird;
- Speichern des Datensteuerrahmens in einem Datenbanksystem, wobei
   - der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
   - beispielsweise der Datensteuerrahmen dazu eingerichtet ist den Zugriffsschutz abhängig von einem Prüfergebnis über die Einhaltung der der Verwendungsparameter aufzuheben.

Bei weiteren Ausführungsformen des Verfahrens umfasst das Verfahren weitere Verfahrensschritte, um die funktionalen Merkmale oder um weitere Merkmale der Verarbeitungsvorrichtung bzw. deren Ausführungsformen zu realisieren.

Gemäß einem weiteren Aspekt betrifft die Erfindung ein Verfahren zum rechnergestützten Empfangen mit folgenden Verfahrensschritten:
- Empfangen von Informationen über einen Leistungsgegenstand und/oder einen Verwendungsrahmen, wobei
   - ein Bereitstellen des Leistungsgegenstandes für den Leistungsempfänger mittels einer Anfragenachricht und einer Steuernachricht gesteuert wird;
- Empfangen eines Datensteuerrahmens, wobei
   - der Datensteuerrahmen den Leistungsgegenstand umfasst,
   - eine Verwendbarkeit des Leistungsgegenstands mittels eines Zugriffsschutzes durch den Datensteuerrahmen gesteuert wird,
   - der Datensteuerrahmen Verwendungsparameter über eine Verwendung des Leistungsgegenstandes umfasst,
   - die Verwendungsparameter angeben wann der Zugriffsschutz zur Verwendung des Leistungsgegenstands aufgehoben wird.

Bei weiteren Ausführungsformen des Verfahrens umfasst das Verfahren weitere Verfahrensschritte, um die funktionalen Merkmale oder um weitere Merkmale des Leistungsempfängers bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Sendevorrichtung und/oder die Verarbeitungsvorrichtung und/oder den Leistungsempfänger erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Sendevorrichtung und/oder die Verarbeitungsvorrichtung und/oder den Leistungsempfänger erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;
- Fig. 6: ein weiteres Ausführungsbeispiel der Erfindung;
- Fig. 7: ein weiteres Ausführungsbeispiel der Erfindung; und
- Fig. 8: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

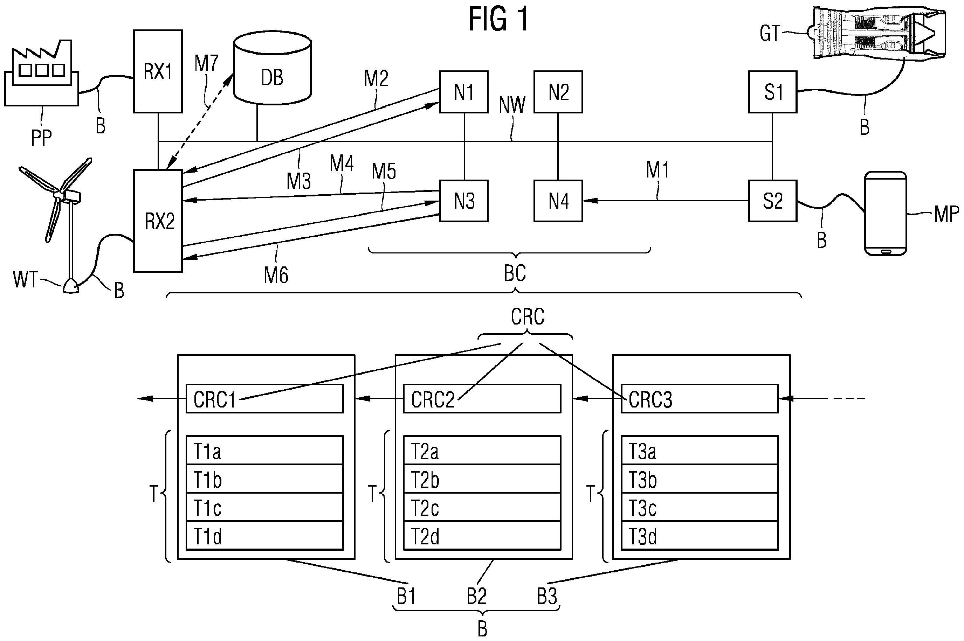

Die Fig. 1 zeigt ein erstes Ausführungsbeispiel der Erfindung. Fig. 1 zeigt dabei ein System das einen ersten Leistungsempfänger RX1, einen zweiten Leistungsempfänger RX2, eine erste Sendevorrichtung S1, eine zweite Sendevorrichtung S2, eine Datenbank DB (z. B. eine hierarchische Datenbank) und eine Verarbeitungsvorrichtung, die über ein Kommunikationsnetzwerk NW (z. B. ein Kommunikationsnetzwerk wie das Internet oder ein Ethernet-Netzwerk) kommunikativ miteinander verbunden sind.

Die Verarbeitungsvorrichtung ist mittels eines verteiltes Datenbanksystem BC (z. B. eine Blockkette) realisiert, die durch eine Vielzahl von Knoten (z. B. Blockkettenknoten N1 - N4) gebildet wird, wobei die Knoten z. B. ebenfalls über das Kommunikationsnetzwerk NW kommunikativ miteinander verbunden sind.

In Fig. 1 sind ein erster Knoten N1, ein zweiter Knoten N2, ein dritter Knoten N3 und ein vierter Knoten N4 gezeigt, die die Knoten der Blockkette BC bilden, wobei die Blockkette die Verarbeitungsvorrichtung realisiert. Die Blockkette kann zudem noch weitere Knoten umfassen, die hier nicht dargestellt sind.

Die erste Sendevorrichtung S1 ist über einen Bus B mit einem ersten Gerät kommunikativ verbunden, wobei das erste Gerät beispielsweise eine Gasturbine GT ist. Die zweite Sendevorrichtung S2 ist über einen Bus B mit einem zweiten Gerät kommunikativ verbunden, wobei das zweite Gerät z. B. ein Mobiltelefon MP ist. Die erste Sendevorrichtung kann z. B. auch als integrale Komponente des ersten Gerätes ausgebildet sein. Ebenso kann die zweite Sendevorrichtung als integrale Komponente des zweiten Gerätes ausgebildet sein.

Die erste Sendevorrichtung S1 umfasst vorzugsweise einen Sensor oder mehrere Sensoren, die beispielsweise integral in die erste Sendevorrichtung S1 integriert sind oder mittels des ersten Gerätes bzw. der Gasturbine GT ein Teil der ersten Sendevorrichtung bilden, indem z. B. entsprechende Sensoren der Gasturbine GT über den Bus B mit der ersten Sendevorrichtung S1 kommunikativ verbunden sind. Bei den Sensoren der Gasturbine GT kann es sich beispielsweise um Hitzesensoren, Belastungssensoren (z. B. für das Turbinengehäuse oder Turbinenschaufeln) oder Leistungssensoren (z. B. zur Messung der gerade erbrachten Leistung des Gasturbine GT) handeln.

Die zweite Sendevorrichtung S2 umfasst vorzugsweise einen Sensor oder mehrere Sensoren, die beispielsweise integral in die zweite Sendevorrichtung S2 integriert sind oder mittels des zweiten Gerätes bzw. des Mobiltelefons MP ein Teil der zweiten Sendevorrichtung bilden, indem z. B. entsprechende Sensoren des Mobiltelefons MP über den Bus B mit der zweiten Sendevorrichtung S2 kommunikativ verbunden sind. Bei den Sensoren des Mobiltelefons MP kann es sich beispielsweise um Temperatursensoren, Lichtsensoren (z. B. um die Hintergrundbeleuchtung des Mobiltelefons MP einzustellen) oder ein GPS-Modul (z. B. zur Messung der Position des Mobiltelefons MP) handeln.

Der erste Leistungsempfänger RX1 ist über einen Bus B mit einem ersten Steuersystem z. B. einer Kraftwerksanlage PP kommunikativ verbunden. Der zweite Leistungsempfänger RX2 ist über einen Bus B mit einem zweiten Steuersystem z. B. einer Windturbine kommunikativ verbunden. Der zweite Leistungsempfänger RX2 kann z. B. als eine integrale Komponente des zweiten Steuersystems ausgebildet sein. Der erste Leistungsempfänger RX1 kann z. B. als eine integrale Komponente des ersten Steuersystems ausgebildet sein.

Der jeweilige Bus B kann beispielsweise ein Feldbus (z. B. ProfiBus/Process Field Bus), ein Kommunikationsnetzwerk, ein Universal Serial Bus (USB) oder ein Peripheral Component Interconnect Bus (PCI-Bus) sein, der eine entsprechende Kommunikation ermöglicht.

Desweiteren zeigt die Fig. 1 Blöcke B, beispielsweise einen ersten Block B1, einen zweiten Block B2 und einen dritten Block B3, einer Blockkette BC, wobei hier insbesondere ein Ausschnitt der Blockkette BC exemplarisch gezeigt ist.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine BlockkettenInfrastruktur mit mehreren Blockketten-Knoten (Knoten N1, N2, N3, N4) realisiert. Bei den Knoten kann es sich beispielsweise um Blockkettenorakel oder vertrauenswürdige Knoten handeln. Auch die erste Sendevorrichtung S1 und/oder die zweite Sendevorrichtung S2 und/oder der erste Leistungsempfänger RX1 und/oder der zweite Leistungsempfänger RX2 und/oder die hierarchische Datenbank DB können als Blockketten-Knoten des verteilten Datenbanksystems bzw. der Blockkette ausgebildet sein. Ein Teil der Knoten der Blockkette BC (z. B. die Knoten N1, N2, N3, N4) bildet dabei die Verarbeitungsvorrichtung.

Die Knoten sind über das Netzwerk NW (z. B. ein Kommunikationsnetzwerk wie das Internet oder ein Ethernet-Netzwerk) miteinander kommunikativ verbunden. Mittels der BlockkettenInfrastruktur werden beispielsweise zumindest ein Teil der Datenblöcke B oder alle Datenblöcke B der Blockkette BC für einen Teil oder alle Knoten der Blockkette repliziert.

Mittels der Verarbeitungsvorrichtung sind vorzugsweise die Sendevorrichtungen mit den Leistungsempfängern verbunden, wobei die Verarbeitungsvorrichtung vorzugsweise die Datenverwaltung für Steuerrahmen steuert.

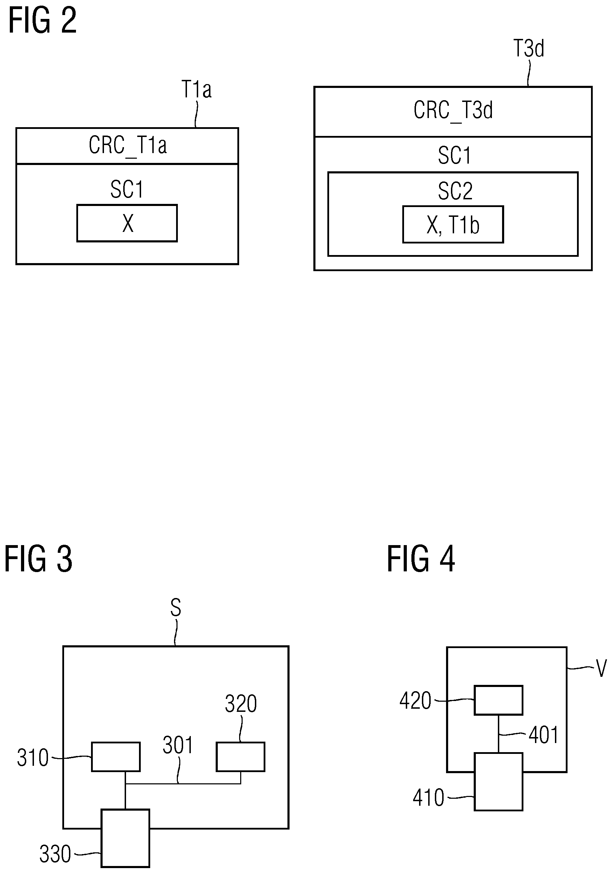

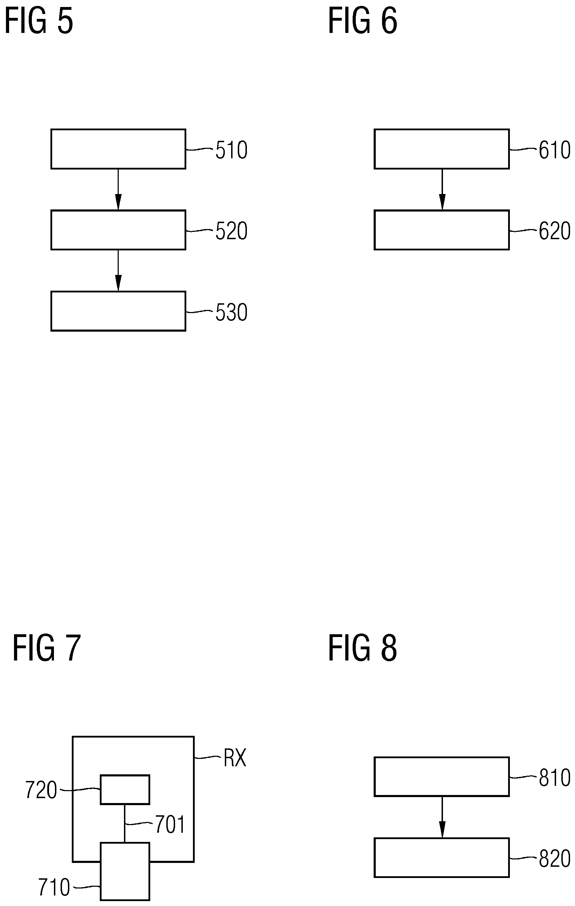

Die Fig. 3 und die Fig. 4 erläutern einen beispielshaften Aufbau einer Sendevorrichtung (Fig. 3) und einer Verarbeitungsvorrichtung V (Fig. 4). Zudem wird in Fig. 7 ein beispielhafter Aufbau eines Leistungsempfängers erläutert.

Je nach Implementierungsvariante kann - wie bereits erläutert - die Blockketteauch die erste Sendevorrichtung S1 und/oder die zweite Sendevorrichtung S1 und/oder den ersten Leistungsempfänger RX1 und/oder den zweiten Leistungsempfänger RX2 umfassen.

Im Einzelnen zeigt die Fig. 3 einen beispielshaften Aufbau einer Sendevorrichtung S zum Bereitstellen eines Leistungsgegenstands. Bei der ersten Sendevorrichtung S1 und/oder bei der zweite Sendevorrichtung S2 aus Fig. 1 kann es sich beispielsweise um eine solche Sendevorrichtung S handeln, wie sie in Fig. 3 dargestellt ist.

Die Sendevorrichtung S umfasst ein Kodierungsmodul 310 (z. B. einen Codegenerator), ein Steuermodul 320 und eine erste Datenschnittstelle 330 (z. B. ein Netzwerkschnittstelle), die über den Bus 301 kommunikativ miteinander verbunden sind.

Das Kodierungsmodul 310 ist dazu eingerichtet Verwendungsparameter für den Leistungsgegenstand zu erzeugen.

Das Steuermodul 320 ist dazu eingerichtet einen Datensteuerrahmen zu erzeugen und/oder zu konfigurieren, wobei der Datensteuerrahmen den Leistungsgegenstand umfasst. Dabei wird eine Verwendbarkeit des Leistungsgegenstands mittels eines Zugriffschutzes durch den Datensteuerrahmen gesteuert. Der Datensteuerrahmen umfasst den Verwendungsparameter, wobei die Verwendungsparameter angeben wann der Zugriffschutz zur Verwendung des Leistungsgegenstands aufgehoben wird.

Die erste Datenschnittstelle 330 ist dazu eingerichtet den Datensteuerrahmen beispielsweise an ein verteiltes Datenbanksystem (z. B. eine Verarbeitungsvorrichtung, die mittels einer Blockkette realisiert ist) zu senden.

Die Fig. 4 zeigt eine Verarbeitungsvorrichtung V, so wie diese beispielsweise durch das verteilte Datenbanksystem BC bzw. die Blockkette realisiert wird, die in Fig. 1 dargestellt ist.

Die Verarbeitungsvorrichtung V kann vorzugsweise als ein verteiltes Datenbanksystem ausgebildet sein. Hierbei kann das verteilte Datenbanksystem eine Vielzahl von Knoten umfassen (z. B. die Knoten N1 bis N4).

Die Verarbeitungsvorrichtung V umfasst eine zweite Datenschnittstelle 410 und ein Speichermodul 420, die über den Bus 401 miteinander kommunikativ verbunden sind.

Die zweite Datenschnittstelle 410 ist dazu eingerichtet einen Datensteuerrahmen zu empfangen, wobei der Datensteuerrahmen einen Leistungsgegenstand umfasst. Dabei wird eine Verwendbarkeit des Leistungsgegenstands mittels eines Zugriffsschutzes durch den Datensteuerrahmen gesteuert und die Verwendungsparameter geben an, wann der Zugriffsschutz zur Verwendung des Leistungsgegenstands aufgehoben wird. Der Datensteuerrahmen umfasst dabei die Verwendungsparameter über eine Verwendung des Leistungsgegenstandes.

In einer Variante geben die Verwendungsparameter an in welchem Bereich eine Gegenleistung für eine Nutzung des Leistungsgegenstandes abgeändert werden können. Dies gilt insbesondere auch für die anderen genannten Ausführungsbeispiele.

In einer Variante umfasst der Datensteuerrahmen beispielsweise Leistungsgegenstandseigenschaften, die z. B. einem Leistungsempfänger als Informationen über den Leistungsgegenstand übermittelt werden können.

Das Speichermodul 420 ist dazu eingerichtet den Datensteuerrahmen in einem Datenbanksystem (z. B. der Datenbank DB, die in Fig. 1 gespeichert ist oder das verteilte Datenbanksystem BC aus Fig. 1) zu speichern, wobei der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen. In einer Variante kann der Datensteuerrahmen und/oder der Leistungsgegenstand in der Datenbank DB und/oder dem verteilten Datenbanksystem BC gespeichert werden.

Beispielsweise ist der Datensteuerrahmen dazu eingerichtet den Zugriffsschutz abhängig von einem Prüfergebnis über die Einhaltung der der Verwendungsparameter aufzuheben. Eine solche Aufhebung erfolgt vorzugsweise, wenn die Leistungsparameter und/oder Verwendungsparameter für eine Verwendung des Leistungsgegenstandes eingehalten sind.

Die Fig. 7 zeigt einen Leistungsempfänger RX, so wie z. B. der erste Leistungsempfänger RX1 und/oder der zweite Leistungsempfänger RX2 aus Fig. 1.

Der Leistungsempfänger umfasst ein Kommunikationsmodul 710 und ein Leistungsempfangsmodul 720, die über einen Bus 701 kommunikativ miteinander verbunden sind.

Das Kommunikationsmodul 710 ist dazu eingerichtet Informationen über einen Leistungsgegenstand und/oder einen Verwendungsrahmen zu empfangen, wobei ein Bereitstellen des Leistungsgegenstandes für den Leistungsempfänger mittels einer Anfragenachricht und einer Steuernachricht gesteuert wird.

Das Leistungsempfangsmodul 720 ist dazu eingerichtet einen Datensteuerrahmen zu empfangen, wobei der Datensteuerrahmen den Leistungsgegenstand umfasst. Dabei wird eine eine Verwendbarkeit des Leistungsgegenstands mittels eines Zugriffsschutzes durch den Datensteuerrahmen gesteuert.

Der Datensteuerrahmen umfasst dabei Verwendungsparameter über eine Verwendung des Leistungsgegenstandes.

Die Verwendungsparameter geben dabei an, wann der Zugriffsschutz zur Verwendung des Leistungsgegenstands aufgehoben wird.

Nachfolgend werden die Funktionsweise der Erfindung und deren Einzelkomponenten beim Zusammenwirken erläutert.

Die zweite Sendevorrichtung S2 erfasst über das mit dem Bus B verbundene Mobiltelefon MP Sensordaten bzw. nutzt die Sensoren zum Erfassen der Sensordaten. Die zweite Sendevorrichtung S2 umfasst dabei beispielsweise die Merkmale der in Fig. 3 dargestellten Sendevorrichtung S. Die Sensordaten sind beispielsweise ein konkretes Beispiel für einen Leistungsgegenstand. Ähnlich kann der Leistungsgegenstand Sensordaten der Gasturbine GT sein oder bestimmte Betriebsmodi der Gasturbine sein. Beispielsweise kann der Leistungsgegenstand in Form eines Betriebsmodus, eine Erlaubnis für einen Betriebsmodus sein, der eine hohe Betriebslast erlaubt, um z. B. die Stromerzeugung der Gasturbine zu erhöhen, jedoch einen erhöhten Verschleiß für die Gasturbine GT mit sich bringt.

Die zweite Sendevorrichtung S2 (oder auch die erste Sendevorrichtung S1) umfasst Verwendungsparameter, die vorgeben, wie der Leistungsgegenstand verwendet werden kann. Diese Verwendungsparameter legen beispielsweise fest unter welchen Bedingungen (z. B. welche Betriebstemperaturen, Lastbereiche, Betriebsmodi) der Leistungsgegenstand verwendet werden kann. Die Verwendungsparameter können beispielsweise auch vorgeben, wo der Gegenstand verwendet werden darf (z. B. mittels GPS Koordinaten) oder ein Ablaufdatum für dessen Verwendung vorgeben oder einen Verwendungszeitraum vorgeben. Auch können die Verwendungsparameter eine beliebige Kombination dieser Möglichkeiten umfassen. Vorzugsweise umfassen die Leistungsgegenstandseigenschaften die Verwendungsparameter, damit diese z. B. einem Leistungsempfänger ggf. übermittelt werden können.

Das Kodierungsmodul 310 erzeugt eine Instanz (z. B. mittels eines Prozessors) der Verwendungsparameter für den Leistungsgegenstand bzw. für die Sensordaten des Mobiltelefons MP. Vorzugsweise erzeugt das Kodierungsmodul 310 ebenfalls den Datensteuerrahmen, der einen Zugriffsschutz z. B. in Form eines kryptographischen Schutzes umfasst.

Das Steuermodul 320 speichert den Leistungsgegenstand und die Verwendungsparameter im Datensteuerrahmen bzw. konfiguriert diesen Datensteuerrahmen, sodass der Datensteuerrahmen den Leistungsgegenstand und die Verwendungsparameter umfasst.

Der Zugriffsschutz auf die Sensordaten ist beispielsweise durch einen kryptographischen Schutz realisiert, indem z. B. der Leistungsgegenstand bzw. die Sensordaten verschlüsselt sind. Der Datensteuerrahmen ist derart konfiguriert, dass der Datensteuerrahmen eine Aufhebung der Verschlüsselung steuert, wenn die Verwendungsparameter für eine Verwendung eingehalten sind. Hierdurch ist es z. B. notwendig, dass ein Leistungsempfänger (z. B. der zweite Leistungsempfänger RX2 und/oder die Verarbeitungsvorrichtung V) entsprechende Informationen bereitstellt, sodass der Datensteuerrahmen überprüfen kann, ob die Verwendungsparameter eingehalten sind. Dies können beispielsweise Blockkettenorakel sein, die entsprechende Sensorinformationen für eine Verwendung bzw. bei einer Verwendung des Leistungsgegenstandes bereitstellen.

Ist beispielsweise in den Verwendungsparametern ein Nutzungszeitraum von 12 Monaten angegeben, so ist es entsprechend notwendig, dass der Datensteuerrahmen den aktuellen Zeitpunkt bei einer Verwendung abrufen kann. Zusätzlich ist in den Verwendungsparametern und/oder Leistungsparametern festgelegt wann der Nutzungszeitraum (z. B. 1. Januar 2018) beginnt. Anhand dieser Informationen überprüft der Datensteuerrahmen, ob der Nutzungszeitraum abgelaufen ist. Wird z. B. am 31. Januar 2018 durch einen Leistungsempfänger versucht auf den Leistungsgegenstand zuzugreifen, so entschlüsselt der Datensteuerrahmen mittels den entsprechenden kryptographischen Schlüsseln den Leistungsgegenstand.

Dies kann beispielsweise dadurch erfolgen, dass die zweite Sendevorrichtung S2 bzw. das Steuermodul der zweiten Sendevorrichtung beim Speichern des Leistungsgegenstandes im Datensteuerrahmen den Leistungsgegenstand verschlüsselt hat. Die kryptographischen Schlüssel werden vorzugsweise von der Verarbeitungsvorrichtung bzw. dem verteilten Datenbanksystem derart gespeichert, dass z. B. nur der Datensteuerrahmen auf die kryptographischen Schlüssel zugreifen kann. Der Datensteuerrahmen kann dabei z. B. ein Smart-Contract sein, der von dem verteilten Datenbanksystem bzw. dessen Infrastruktur ausgeführt wird.

Die zweite Sendevorrichtung übermittelt (z. B. über die erste Datenschnittstelle 330) eine erste Nachricht M1, die den Datensteuerrahmen umfasst an einen Knoten der Verarbeitungsvorrichtung bzw. des verteilten Datenbanksystems BC. Der Datensteuerrahmen wird sofern er nicht bereits als (ein erster) Smart-Contract SC1 vorliegt, durch die Verarbeitungsvorrichtung V in einen ersten Smart-Contract SC1 konvertiert, der den Verwendungsrahmen und den Leistungsgegenstand X umfasst. Diese Konvertierung kann z. B. durch einen Code-Generator durchgeführt werden, der einen entsprechenden Smart-Contract anhand erzeugt.

Dieser Smart-Contract dient dann ggf. als Datensteuerrahmen. Dieser erste Smart-Contract bzw. der Datensteuerrahmen SC1 werden z. B. in der ersten Transaktion T1a der Blockkette gespeichert (Fig. 2). Zusätzlich kann diese erste Transaktion T1a durch eine erste Transaktionsprüfsumme CRC_T1a geschützt sein, die z. B. von der zweiten Sendevorrichtung S2 erzeugt wurde. Der Datensteuerrahmen SC1 kapselt vorzugsweise den Leistungsgegenstand X mittels des Zugriffsschutzes derart (z. B. über eine Verschlüsselung), dass vorzugsweise von anderen Entitäten oder Personen ein Zugriff auf den Leistungsgegenstand X unterbunden wird, der den Verwendungsparametern bzw. Leistungsparametern widerspricht (Fig. 2).

Wie bereits erläutert ist der Datensteuerrahmen vorzugsweise als Smart-Contract realisiert.

Beim Speichern des Datensteuerrahmens SC1 in einer Transaktion des verteilten Datenbanksystems (z. B. die erste Transaktion Tla), kann der Leistungsgegenstand X beispielsweise in einer Datenbank (z. B. die Datenbank DB oder im verteilten Datenbanksystem) gespeichert werden. In der entsprechenden Transaktion bzw. im Datensteuerrahmen wird dann ein entsprechender Verweis/Link (z. B. zu der Datenbankadresse und/oder dem Speicherort des vorzugsweise verschlüsselten Leistungsgegenstandes) anstelle des Leistungsgegenstandes X gespeichert. Der Datensteuerrahmen kann dann vorzugsweise anhand dieses Verweises oder Links auf den Leistungsgegenstand X zugreifen und/oder den Leistungsgegenstand X bereitstellen, wenn die Verwendungsparameter und/oder die Leistungsparameter bei einer Verwendung eingehalten werden.

Entsprechend kann beispielsweise unter einem Zugreifen auf den Leistungsgegenstand X des Datensteuerrahmens auch der Zugriff auf den Leistungssteuerrahmen über den Link/Verweis verstanden werden.

Vorzugsweise ist der Leistungsgegenstand X solange durch den Zugriffschutz zugriffsgeschützt, bis eine Einhaltung der Verwendungsparameter durch den Datensteuerrahmen festgestellt wurde. Die Verarbeitungsvorrichtung ist beispielsweise dahingehend vorteilhaft um die Verwendung des Leistungsgegenstandes X entsprechend der Verwendungsparameter mittels des Datensteuerrahmens sicherzustellen.

Die Verarbeitungsvorrichtung kann in weiteren Varianten noch ein Leistungserbringungsmodul und/oder ein Bereitstellungsmodul und/oder ein Anfrageverarbeitungsmodul und/oder ein Bestimmungsmodul umfassen. Diese Module bzw. eine Kombination dieser Module ist vorteilhaft, wenn die Bereitstellung des Leistungsgegenstandes X komplexere Verarbeitungsschritte erfordert. Dies kann z. B. der Fall sein, wenn die Verwendungsparameter eine Gegenleistung für eine Verwendung des Leistungsgegenstandes X voraussetzen. Noch komplexere Verarbeitungsschritte sind erforderlich, wenn die Verwendungsparameter angeben, in welchem Bereich die Gegenleistung abgeändert werden kann.

In einem solchen komplexeren Ausführungsbeispiel tauschen z. B. der zweite Leistungsempfänger RX2 Informationen mit der Verarbeitungsvorrichtung V bzw. dem ersten Knoten N1 des verteilten Datenbanksystems BC aus.

Hierbei werden mittels des Bereitstellungsmoduls Informationen über den Leistungsgegenstand und/oder die Gegenleistung und/oder die Verwendungsparameter und/oder Leistungsgegenstandseigenschaften und/oder den Datensteuerrahmen dem zweiten Leistungsempfänger bereitgestellt, die der zweite Leistungsempfänger RX2 mittels einer zweiten Nachricht M2 empfängt/erhält. Hierzu umfassen vorzugsweise die bereitgestellten Informationen die Gegenleistung und/oder die Verwendungsparameter und/oder Leistungsgegenstandseigenschaften und/oder den Datensteuerrahmen.

Anhand dieser Informationen bzw. der zweiten Nachricht M2 kann beispielsweise der zweite Leistungsempfänger RX2 weitere Verwendungsparameter erzeugen und z. B. an die Verarbeitungsvorrichtung mittels der Anfragenachricht übermitteln. Hierzu umfasst der zweite Leistungsempfänger RX2 ein Berechnungsmodul, das dazu eingerichtet ist, anhand der Informationen bzw. der zweiten Nachricht M2 für den Leistungsgegenstand weitere Verwendungsparameter zu berechnen und mittels des Kommunikationsmoduls als die dritte Nachricht (z. B. eine Anfragenachricht) M3 an die Verarbeitungsvorrichtung bzw. an den Knoten N1 zu senden. Die Anfragenachricht (oder einfach nur als Anfrage bezeichnet) bzw. dritte Nachricht M3 wird von dem Anfrageverarbeitungsmodul der Verarbeitungsvorrichtung verarbeitet. Hierbei kann beispielsweise überprüft werden, ob die Anfrage (bzw. weiteren Verwendungsparameter) die Verwendungsparameter und/oder die Gegenleistung des Datensteuerrahmens im dem abänderbaren Bereich einhält. Ist dies der Fall, kann die Anfragenachricht bzw. die dritte Nachricht M3 durch das Bestimmungsmodul weiterverarbeitet werden, um z. B. eine zu erbringende Leistung für die Nutzung des Leistungsgegenstandes entsprechenden der weiteren Verwendungsparameter zu berechnen.

Beispielsweise können die Verwendungsparameter des Leistungsgegenstandes vorgeben, welche Gegenleistung für die Verwendung des Leistungsgegenstanden erfüllt sein muss bzw. erbracht werden muss. Es kann z. B. vorgegeben sein, dass der Leistungsgegenstand maximal 12 Monate für einen Preis von 10000 € (die Gegenleistung) verwendet werden kann. Beispielsweise hat der Leistungsempfänger in seinen weiteren Verwendungsparametern angegeben, dass eine Verwendung für 6 Monate erfolgen soll. Die Verwendungsparameter (die vom der Verarbeitungsvorrichtung empfangen wurden) kodieren hierbei beispielsweise Regeln oder Angaben in welchem Bereich die Gegenleistung und/oder die Verwendungsparameter abgeändert werden können. Im genannten Beispiel kann z. B. noch vorgegeben sein, dass der Leistungsgegenstand mindestens einen vorgegebenen Zeitraum genutzt werden muss (z. B. für 6 Monate). Anhand dieser Angaben wird z. B. ein Preis für 6 Monate bestimmt. Dieser kann z. B. in diesem Beispiel dann 5000 € betragen, da der Leistungsgegenstand nur die Hälfte der Zeit genutzt wird. Diese 5000 € stellen dann eine zu erbringende Leistung von dem Leistungsempfänger dar, die anhand der Informationen der Anfragenachricht berechnet wurden. Die Anfragenachricht bzw. das Bestimmen der Gegenleistung erfolgt durch das Bestimmungsmodul, das die zu erbringende Leistung anhand der vom Leistungsempfänger in den weiteren Verwendungsparametern angegebene Verwendung unter Berücksichtigung der Verwendungsparameter und des abänderbaren Bereichs der Gegenleistung berechnet wird.

Das Bestimmungsmodul berechnet dann also die zu erbringende Leistung anhand der weiteren Verwendungsparameter des Leistungsempfängers. Überschreiten beispielsweise die weiteren Verwendungsparameter des Leistungsempfängers nicht die Verwendungsparameter für den Leistungsgegenstand so kann beispielsweise die Verarbeitungsvorrichtung bzw. das Bestimmungsmodul anhand dieser Daten die vom Leistungsempfänger zu erbringende Leistung berechnen, wenn der Leistungsempfänger den Leistungsgegenstand entsprechend der weiteren Verwendungsparameter verwenden möchte.

In einer Variante der Verarbeitungsvorrichtung berücksichtigt das Bestimmungsmodul bei der Berechnung der zu erbringenden Leistung das Ergebnis des Überprüfens, das durch das Anfrageverarbeitungsmodul ermittelt wurde. In einem solchen Fall wird die Anfrage(nachricht) direkt nach dem Erhalt durch das Anfrageverarbeitungsmoduls durch das Bestimmungsmodul weiterverarbeitet.

Konnte eine zu erbringende Leistung für die Verwendung des Leistungsgegenstandes entsprechend den weiteren Verwendungsparametern berechnet werden. Wird der Leistungsempfänger mittels einer vierten Nachricht (auch Steuernachricht genannt) M4 über die ermittelte und die zu erbringende Leistung (z. B. 5000 € Nutzungsgebühr für 6 Monate Verwendung des Leistungsgegenstandes) informiert.

Hierzu wird vorzugsweise diese Steuernachricht mit der zu erbringenden Leistung an den Leistungsempfänger mit der Nachricht M4 übermittelt. Dies kann z. B. als Transaktion des verteilten Datenbanksystems realisiert sein, wenn der Leistungsempfänger z. B. ein Knoten des verteilten Datenbanksystems ist oder einen Zugriff auf eine Schnittstelle des verteilten Datenbanksystems hat. Die vierte Nachricht M4 kann dann beispielsweise vom dritten Knoten N3 an den zweiten Leistungsempfänger RX2 gesendet werden.

Der zweite Leistungsempfänger RX2 erbringt die Leistung oder eine Bestätigung für die Erbringung der zu erbringenden Leistung mit einer fünften Nachricht M5 und übermittelt diese der Verarbeitungsvorrichtung V bzw. dem dritten Knoten N3 des verteilten Datenbanksystems BC.

Daraufhin oder bereits beim Bestimmen der zu erbringenden Leistung, werden die ermittelten Parameter (z. B. als Leistungsparameter bezeichnet) für die Nutzung des Leistungsgegenstandes durch den Leistungsempfänger im Datensteuerrahmen oder einem weiteren Datensteuerrahmen, der den vom der Verarbeitungsvorrichtung empfangenen Datensteuerrahmen umfasst oder auf diesen verweist, gespeichert. Diese Leistungsparameter können beispielsweise anhand der weiteren Verwendungsparameter des Leistungsempfängers unter Berücksichtigung der Verwendungsparameter des Datensteuerrahmens berechnet werden. In einfachen Fällen können die Leistungsparameter den weiteren Verwendungsparametern entsprechen, wenn erfolgreich für diese weiteren Verwendungsparameter eine zu erbringende Leistung bestimmt werden konnte und/oder die weiteren Verwendungsparameter nicht die Verwendungsparameter überschreiten.

Nachfolgend wird insbesondere in Bezug auf Fig. 2 davon ausgegangen, dass ein weiterer Datensteuerrahmen als ein zweiter Smart-Contract SC2 verwendet wird/realisiert ist, wobei der Datensteuerrahmen der von der Verarbeitungsvorrichtung empfangen wurde ebenfalls als ein/der erste/r Smart-Contract SC1 realisiert ist.

Der weitere Datensteuerrahmen SC2 umfasst beispielsweise den Datensteuerrahmen SC1, wobei der Datensteuerrahmen SC1 durch den Zugriffsschutz des weiteren Datensteuerrahmens SC2 zugriffsgeschützt ist. Der weitere Datensteuerrahmen SC2 hebt Zugriffsschutz für den Datensteuerrahmen SC1 auf, solange die Leistungsparameter (z. B. analog zu den Verwendungsparametern) durch den Leistungsempfänger erfüllt/eingehalten sind. Mit anderen Worten ist der weitere Datensteuerrahmen SC2 analog zum Datensteuerrahmen SC1 aufgebaut, wobei der weitere Datensteuerrahmen SC2 anstelle eines Zugriffsschutzes für den Leistungsgegenstand einen Zugriffsschutz für den Datensteuerrahmen SC1 aufhebt oder eine Aufhebung des Zugriffsschutzes steuert, wenn die Leistungsparameter durch den Leistungsempfänger eingehalten sind. Beispielsweise kann der Zugriffsschutz des weiteren Datensteuerrahmens SC2 analog zu dem Zugriffsschutz des Datensteuerrahmens SC1 realisiert werden.

Bezogen auf das genannte Beispiel würden z. B. nach Ablauf der 6 Monate, die z. B. in den Leistungsparametern kodiert bzw. gespeichert sind, mittels des Zugriffsschutzes des Datensteuerrahmens und/oder des weiteren Datensteuerrahmens ein Zugriff auf den Leistungsgegenstand unterbunden werden. Beispielsweise kann der weitere Datensteuerrahmen analog zum von der Verarbeitungsvorrichtung empfangenen Datensteuerrahmen implementiert sein (z. B. als Smart-Contract einer Blockkette). Vorzugsweise wird hierdurch ein zweistufiger Zugriffsschutz realisiert indem der Datensteuerrahmen (der von der Verarbeitungsvorrichtung) die Verwendungsparameter überprüft, ob die Verwendungsparameter eingehalten werden und indem der weiteren Datensteuerrahmen die Leistungsparameter überprüft, ob diese eingehalten sind. Abhängig von dem jeweiligen Prüfergebnis kann beispielsweise der Zugriffsschutz für den jeweiligen Datensteuerrahmen aufgehoben oder eingeschaltet bzw. durchgeführt werden. Alternativ kann beispielsweise ein gemeinsamer Zugriffsschutz von beiden Datensteuerrahmen abhängig von dem Ergebnis der jeweiligen Einzelprüfung eines Datensteuerrahmens aufgehoben werden, wenn die Verwendungsparameter und die Leistungsparameter erfüllt sind. Vorzugsweise ist der Leistungsgegenstand solange durch den Zugriffschutz zugriffsgeschützt, bis eine Einhaltung der Leistungsparameter und der Verwendungsparameter durch die jeweiligen Datensteuerrahmen bestätigt wurde.

Beispielsweise kann durch die Erfindung ausgeschlossen werden, dass die Leistungsparameter die Verwendungsparameter überschreiten. Die Verwendungsparameter geben z. B. die weitesten/freisten Verwendungsmöglichkeiten des Leistungsgegenstandes an. Die Leistungsparameter überschreiten dabei nicht die Verwendungsparameter, dies wird insbesondere durch den Datensteuerrahmen SC1 sichergestellt. Der weitere Datensteuerrahmen SC2 stellt sicher, dass die vom Leistungsempfänger zu erbringende Leistung erbracht wird, um den Leistungsgegenstand zu nutzen. Insbesondere die Kombination dieses zweistufigen Prozesses von Smart-Contracts/Datensteuerrahmen erlaubt eine dezentrale Verarbeitung des Leistungsgegenstandes, selbst z. B. in einer Umgebung in denen sich weder Sender, Verarbeitungsvorrichtung oder Leistungsempfänger vertrauen.

Die Bestätigung für die Erbringung der zu erbringenden Leistung der fünften Nachricht M5 wird z. B. von der Verarbeitungsvorrichtung bzw. dem Leistungserbringungsmodul der Verarbeitungsvorrichtung V überprüft. Beispielsweise wird hierzu eine Leistungserbringungsnachricht an einen Leistungsempfänger übermittelt, wenn die zu erbringende Leistung vom Leistungsempfänger erbracht wurde. Dies erfolgt vorzugsweise mittels der sechsten Nachricht M6.

Die Prüfung, ob die Verwendungsparameter und/oder Leistungsparameter eingehalten sind, erfolgt z. B. anhand von Informationen, die die fünfte Nachricht umfasst. Dabei kann es sich z. B. um eine Nummer eines Wartungsvertrages, eine Überweisungsbestätigung, einen Verwendungsort, einen Verwendungszeitraum oder eine Bereitstellung einer Ressource (z. B. Strom, Öl etc.) handeln, welche die Nutzung des Leistungsgegenstandes vorrausetzt bzw. für die Nutzung des Leistungsgegenstandes vorausgesetzt wird. Der Datensteuerrahmen SC1 und/oder der weitere Datensteuerrahmen SC2 überprüfen die Einhaltung der Leistungsparameter bzw. Verwendungsparameter anhand dieser Informationen. Beispielsweise geben die Verwendungsparameter vor, dass der Leistungsgegenstand nur in Kambodscha, Andorra oder Lichtenstein verwendet werden kann. Der Datensteuerrahmen überprüft dann, ob diese Anforderungen anhand des Nutzungsortes in der Nachricht M5 erfüllt sind. Werden beispielsweise Leistungsparameter verwendet, die von einem weiteren Datensteuerrahmen SC2 überprüft werden, kann z. B. damit sichergestellt werden, dass für die Nutzung des Leistungsgegenstandes eine entsprechende Ressource (z. B. Öl oder Geld) bereitgestellt wurde. Handelt es sich beispielsweise bei dem Leistungsgegenstand um eine Gasturbine oder ein Kraftwerk, das mit Gas/Öl betrieben wird, so kann die Ressource Gas oder Öl einer bestimmten Qualität sein, damit z. B. in einem Betrieb des Kraftwerkes mit hoher Leistung (und starker Beanspruchung der Kraftwerksteile), keine übermäßiger Verschleiß stattfindet.

Für das konkrete Beispiel einer Kraftwerksanlage können beispielsweise die Verwendungsparameter vorgeben, dass die Kraftwerksanlage oder eine Gasturbine in einem Standardbetriebsmodus 8 - 10 Megawatt leisten kann. In einem Hochleistungsbetriebsmodus der Gasturbine können 11 - 15 Megawatt erreicht werden, wenn sichergestellt wird, dass entsprechende Ressourcen (z. B. Öl/Gas in einer höheren Qualität und/oder Menge und/oder Erdgasvordruck) bereitgestellt werden. Möchte nun der Leistungsempfänger die Gasturbine mit einer Leistung von 12 Megawatt betreiben (z. B. mit einer Anfragenachricht), werden die entsprechenden Leistungsparameter und eine zu erbringende Leistung (z. B. Erdgasvordruck 23 bar für 12 Megawatt) für diesen Betriebsmodus ermittelt und dies mit der Steuernachricht dem Leistungsempfänger mitgeteilt. Hat der Leistungsempfänger die Leistungserbringung und die Einhaltung der Leistungsparameter bestätigt, so wird dies durch die entsprechenden Datensteuerrahmen überprüft. Dies kann dadurch erfolgen, dass die entsprechende fünfte Nachricht M5 mit einer Bestätigung der Leistungserbringung entsprechende Informationen bereitstellt oder diese Informationen von anderen Quellen (z. B. Blockkettenorakel, Sensoren usw.) erfasst und überprüft werden. Beispielsweise kann ein Blockkettenorakel, das einen entsprechenden Sensor umfasst, auch z. B. kontinuierlich den Erdgasvordruck bei einer Leistung von 12 Megawatt überwachen. Wird eine unerlaubte Abweichung von dem Erdgasvordruck festgestellt, wird die Gastrubine z. B. wieder in den Standardbetriebsmodus zurückgefahren, indem der Zugriff auf den Hochleistungsbetriebsmodus mittels des Zugriffschutzes unterbunden wird (z. B. indem über einen separaten Kommunikationskanal entsprechende Steuernachrichten von dem entsprechenden Datensteuerrahmen an die Gasturbine geschickt wird). In diesem Beispiel ist der Leistungsgegenstand der Betriebsmodus der Gasturbine.

Darf der Leistungsgegenstand z. B. nur in Kambodscha, Andorra oder Lichtenstein (durch die Verwendungsparameter vorgegeben) verwendet werden, kann bei einer Verwendung des Leistungsgegenstandes in Andorra der entsprechende Zugriffsschutz aufgehoben werden. Die Überprüfung erfolgt z. B. über GPS Daten des Leistungsempfängers (z. B. wenn der Leistungsempfänger ein Mobiltelefon ist) oder Tracing der IP-Adresse. Hierzu ruft der entsprechende Datensteuerrahmen SC1 oder SC2 entsprechende Informationen z. B. über ein Blockkettenorakel ab. Wird der Leistungsgegenstand z. B. in Frankreich benutzt wird der Zugriffsschutz z. B. nicht aufgehoben.

Der freigegebene Leistungsgegenstand wird z. B. über eine sechste Nachricht M6 (die auch als Leistungserbringungsnachricht angesehen werden kann) dem Leistungsempfänger übermittelt bzw. dem Leistungsempfänger wird in der sechsten Nachricht M6 eine Datenquelle (z. B. eine temporär gültige Datenschnittstelle, IP-Adresse, Link, eine DB) übermittelt, wo der Leistungsgegenstand abgerufen bzw. genutzt werden kann. Optional kann der Leistungsgegenstand in einer siebten Nachricht M7 bzw. einen Datenaustausch mit mehreren siebten Nachrichten M7 den Leistungsgegenstand von der Datenquelle abrufen.

Ist z. B. der Leistungsgegenstand in der Datenquelle verschlüsselt, so kann die sechste Nachricht einen temporär gültigen (kryptographischen) Schlüssel bereitstellen. Der Leistungsgegenstand der z. B. über eine Datenquelle in Form der Datenbank DB bereitgestellt wird, ist derart verschlüsselt, dass der Leistungsgegenstand mit dem temporär gültigen kryptographischen Schlüssel entschlüsselt werden kann. Der Zugriffsschutz (z. B. die Verschlüsselung des Leistungsgegenstandes) wird durch die jeweiligen Datensteuerrahmen gesteuert. Beispielsweise kann der Leistungsgegenstand zweimal verschlüsselt sein. Die erste Verschlüsselung ist z. B. der Zugriffschutz des Datensteuerrahmens SC1 und die zweite Verschlüsselung ist z. B. der Zugriffschutz des zweiten Steuerrahmens.

Es ist z. B. auch denkbar, dass nur eine Verschlüsselung des Leistungsgegenstandes erfolgt, der kryptographische Schlüssel zum Entschlüsseln des Leistungsgegenstandes jedoch aus zwei Teilen besteht. Ein erster Teil, der von dem weiteren Datensteuerrahmen bereitgestellt wird und ein zweiter Teil der von dem Datensteuerrahmen bereitgestellt wird. Beziehen sich die Leistungsparameter und/oder Verwendungsparameter z. B. auf einen Nutzungszeitraum, so können die Gültigkeit der entsprechenden kryptographischen Verschlüsslungen und/oder die Gültigkeit der entsprechenden kryptographischen Schlüssel anhand des Nutzungszeitraums für den Leistungsgegenstandes bestimmt werden. Die Gültigkeit von ersten kryptographischen Schlüsseln zur Aufhebung des Zugriffsschutzes des Datensteuerrahmens SC1 in Form einer Verschlüsselung ist z. B. durch den maximalen Nutzungszeitraum von 12 Monaten in den Verwendungsparametern festgelegt. Die Gültigkeit von zweiten kryptographischen Schlüsseln zur Aufhebung des Zugriffsschutzes des weiteren Datensteuerrahmens SC2 in Form einer weiteren Verschlüsselung ist z. B. durch den tatsächlichen Nutzungszeitraum von 6 Monaten in den Leistungsparametern festgelegt. In keinem Fall ist z. B. eine Nutzung von mehr als 12 Monaten möglich, da ggf. die Gültigkeit der ersten kryptographischen Schlüssel nach einer Nutzungszeit von 12 Monaten abläuft.

Mit anderen Worten wird der Zugriffsschutz nach Erbringung der Leistung durch den Datensteuerrahmen aufgehoben. Beispielsweise kann in einer Variante der Erfindung auch der weitere Datensteuerrahmen SC2 (inkl. des Datensteuerrahmens SC1) und/oder der Datensteuerrahmen SC1 an den Leistungsempfänger übermittelt werden. Dies ist beispielsweise realisierbar, wenn der Leistungsempfänger ebenfalls als Knoten des verteilten Datenbanksystems ausgebildet ist.

Nachfolgend wird nochmals anhand der Fig. 1 nochmals ein vereinfachte Anwendung der Erfindung erläutert.

Die zweite Sendevorrichtungen S2 erfasst über die Sensoren des Mobiltelefons MP Witterungsdaten in einer bestimmten Region. Dies kann z. B. ein Mobiltelefon eines Joggers sein, der in einem Waldstück in der Nähe (Region) einer Windkraftanlage Fahrrad fährt.

Es ist z. B. auch denkbar, dass eine Vielzahl ähnlicher zweiter Sendevorrichtungen über Sensoren von IoT (Internet der Dinge) oder Smart-Geräten (Smart-Phone, Smart-Watch) ebenfalls Witterungsdaten erfassen. Bei IoT Geräten kann es sich beispielsweise auch um ein Fahrzeug mit entsprechenden Sensoren handeln (z. B. Regensensor der ursprünglich für die Steuerung der Scheibenwischeranlage dient).

Die Witterungsdaten sind z. B. Helligkeitsdaten oder Regendaten. Eine jeweilige zweite Sendevorrichtung S2 erfasst die entsprechenden Witterungsdaten als Leistungsgegenstand. Hierzu umfasst der Leistungsgegenstand die entsprechenden Witterungsdaten und/oder einen Zeitpunkt und/oder einen Ort. Der Eigentümer der Sendevorrichtung möchte jedoch sicherstellen, dass die Witterungsdaten bzw. der Leistungsgegenstand z. B. nur für erneuerbare Energiequellen/Anwendungen (z. B. Windkraftanlagen) verwendet werden und möchte eine maximale Nutzungsdauer von 10 Tagen ab dem Erfassungszeitpunkt der Witterungsdaten/des Leistungsgegenstandes erlauben. Hierzu legt er die entsprechenden Verwendungsparameter in der Sendevorrichtung über eine Policy/Regeln fest.

Anhand dieser Regeln wird der Datensteuerrahmen SC1 erzeugt, der z. B. die Verwendungsparameter, den Leistungsgegenstand und einen Zugriffsschutz (z. B. eine Verschlüsselung des Leistungsgegenstandes) umfasst, wobei der Zugriffsschutz aufgehoben wird, wenn ein Leistungsempfänger (z. B. der zweite Leistungsempfänger RX2, der ein Teil einer Windturbine WT ist) die Verwendungsparameter einhält. Das Aufheben des Zugriffsschutzes (z. B. das Entschlüsseln des Leistungsgegenstandes) wird durch den Datensteuerrahmen SC1 realisiert, indem dieser z. B. einen entsprechenden kryptographischen Schlüssel zum Entschlüsseln durch den zweiten Leistungsempfänger RX2 erzeugt oder bereitstellt. Alternativ kann der Datensteuerrahmen SC1 auch derart implementiert sein, dass dieser den Leistungsgegenstand bei Einhaltung der Verwendungsparameter selbst entschlüsselt.

Der Datensteuerrahmen SC1 wird mit der ersten Nachricht M1 an die Verarbeitungsvorrichtung übermittelt. Der zweite Leistungsempfänger RX2 ruft mit der zweiten Nachricht M2 Informationen über den Leistungsgegenstand ab (z. B. Wann und wo Witterungsdaten erfasst wurden). Anhand dieser Informationen erzeugt der zweite Leistungsempfänger RX2 weitere Verwendungsparameter und übermittel diese an die Verarbeitungsvorrichtung mittels der Anfragenachricht in der dritten Nachricht M3.

Beispielsweise ist die Windturbine WT bzw. der zweite Leistungsempfänger RX2 nur an regional nahe gelegenen Witterungsdaten interessiert, die höchstens 1 Stunde alt sind. Dies kann z. B. in den weiteren Verwendungsparametern kodiert sein. Diese Filterung von Leistungsgegenständen anhand der weiteren Verwendungsparameter kann z. B. die Verarbeitungsvorrichtung V vornehmen, wenn der zweite Leistungsempfänger RX2 Informationen über beispielsweise Leistungsgegenstände abfragen möchte, die bestimmten Kriterien erfüllen (z. B. Position und/oder alter des Leistungsgegenstandes und/oder Typ des Leistungsgegenstandes - z. B. Witterungsdaten). Dies kann z. B. erfolgen, indem bevor die zweite Nachricht M2 die konkreten Informationen bereitstellt entsprechenden Anforderungen an einen Leistungsgegenstand von dem zweiten Leistungsempfänger RX2 an die Verarbeitungsvorrichtung V, BC übermittelt wurde. Das Verarbeiten der Anforderungen des Leistungsempfängers und/oder Filtern/Auswählen von Leistungsgegenständen entsprechend der Anforderungen des Leistungsempfängers und/oder das Bereitstellen der Informationen über den oder die relevanten Leistungsgegenstände kann z. B. vom Bereitstellungsmodul der Verarbeitungsvorrichtung V, BC realisiert werden.

Das Verarbeiten der Anforderungen des Leistungsempfängers und/oder Filtern/Auswählen von Leistungsgegenständen entsprechend der Anforderungen des Leistungsempfängers und/oder das Bereitstellen der Informationen über den oder die relevanten Leistungsgegenstände kann z. B. auch zweistufig erfolgen, indem in einem ersten Schritt zunächst die entsprechenden Informationen dem Leistungsempfänger bereitgestellt werden. In einem zweiten Schritt wird dann z. B. überprüft, ob die weiteren Verwendungsparameter die Verwendungsparameter der zweiten Sendevorrichtung S2 einhalten. Vorzugsweise wird die Anfrage nur weiterverarbeitet, wenn die weiteren Verwendungsparameter die Verwendungsparameter der zweiten Sendevorrichtung S2 einhalten. Dieser zweite Schritt kann z. B. auch durch das Anfrageverarbeitungsmodul realisiert sein.

Anhand der weiteren Verwendungsparameter des zweiten Leistungsempfängers RX2 und der Verwendungsparameter der zweiten Sendevorrichtung S2 wird eine zu erbringende Leistung für den zweiten Leistungsempfängers RX2 ermittelt, die für eine Verwendung des Leistungsgegenstandes entsprechend der weiteren Verwendungsparameter gilt. Dies erfolgt vorzugsweise nur, wenn die weiteren Verwendungsparameter die Verwendungsparameter der zweiten Sendevorrichtung S2 einhalten. Mittels eine vierten Nachricht M4 wird eine Steuernachricht mit der zu erbringenden Leistung von der Verarbeitungsvorrichtung V, BC an den zweiten Leistungsempfänger RX2 übertragen. Bei der zu erbringenden Leistung kann es sich beispielsweise um einen Geldbetrag handeln oder auch, dass der Betreiber der Windturbine BT Sensorinformationen oder Messdaten über die von der Windturbine WT erbrachte Leistung der zweiten Sendevorrichtung S2 überträgt. Es kann sich beispielsweise um Messdaten handeln, die angeben wie hoch der Anteil an erneuerbaren Energien gemessen an der insgesamt vom Betreiber der Windturbine WT erzeugten Energie ist. Eine Bestätigung über das Erbringen der zu erbringenden Leistung kann in der fünften Nachricht M5 vom zweiten Leistungsempfänger RX2 an die Verarbeitungsvorrichtung V, BC gesendet werden. Die Bestätigung kann z. B. eine Bestätigung über die Übertragung eines Geldbetrages an die zweite Sendevorrichtung S2 sein oder eine Bestätigung darüber, dass die entsprechenden Messwerte an die zweite Sendevorrichtung S2 übertragen wurden.

In der sechsten Nachricht M6 erhält der zweite Leistungsempfänger RX2 den Leistungsgegenstand, wenn der oder die Datensteuerrahmen SC1 und/oder SC2 die Einhaltung der Verwendungsparameter bestätigen und/oder die Leistung erbracht wurde. Wurde ein weiterer Datensteuerrahmen SC2 genutzt - wie oben erläutert - kann dieser in einem ersten Schritt die Einhaltung der Leistungsparameter überprüfen, wobei z. B. die Leistungsparameter anhand der weiteren Verwendungsparameter und der Verwendungsparameter berechnet wurden. Sind diese eingehalten gibt der weitere Datensteuerrahmen SC2 den Datensteuerrahmen SC1 frei, wobei der Datensteuerrahmen SC1 den Leistungsgegenstand X dem zweiten Leistungsempfänger RX2 mit der sechsten Nachricht M6 bereitstellt, wenn die Verwendungsparameter eingehalten sind.

Hält die Windturbine WT die Verwendungsparameter und/oder die Leistungsparameter und/oder hat die zu erbringende Leistung erbracht, so kann es die Witterungsdaten nutzen, um z. B. starke Windböen vorherzusagen und die Windturbine ggf. derart einzustellen (z. B. die Rotorblätter), dass diese starken Winde keinen Schaden an der Windturbine verursachen. Alternativ kann z. B. anhand der Witterungsdaten z. B. schwacher Wind vorhergesagt werden und damit frühzeitig ein Reservekraftwerk angefahren werden, um die Stromversorgung zu sichern.

In einer weiteren Variante oder Anwendung ist der Leistungsgestand X eine Freigabe eines Betriebsmodus der Gasturbine GT. Hierzu legen die Verwendungsparameter fest, welche Betriebsmodi durch die Gasturbine GT unterstützt werden, welche Betriebsparameter für die einzelnen Betriebsmodi von einem ersten Leistungsempfänger RX1 bzw. dem Kraftwerk PP zu erbringen sind, um einen Zugriff auf einen entsprechenden Betriebsmodus zu erlauben. Betriebsparameter (bzw. die Verwendungsparameter, die die Betriebsparameter umfassen) können z. B. Kühlleistung für die Gasturbine GT sein, um eine Überhitzung oder einen starken Verschleiß von Komponenten der Gasturbine GT zu vermeiden. Dabei können für einzelne Betriebsmodi entsprechende Kühlleistungen gefordert sein. Alternativ oder zusätzlich kann für bestimmte Betriebsmodi ein bestimmter Erdgasvordruck und/oder Erdgasmenge vorgegeben sein.

Die im Nachgang genannten weiteren Nachrichten sind vorzugsweise analog zu den Nachrichten M1 - M7 ausgestaltet, so wie diese bereits in den anderen Ausführungsbeispielen erläutert sind.

In dieser Variante des Ausführungsbeispiels umfasst eine weitere erste Nachricht einen Datensteuerrahmen SC1, Der Datensteuerrahmen SC1 umfasst die Verwendungsparameter und den Leistungsgegenstand X in Form einer Freigabe (z. B. ein Passwort um einen entsprechenden Betriebsmodus freizuschalten).

Der Verwendungsrahmen kann z. B. die mögliche Gegenleistung kodieren, die für die Verwendung des Leistungsgegenstandes erforderlich ist bzw. in welchem Umfang die Gegenleistung und/oder die Verwendungsparameter (z. B. Kühlleistung für bestimmte Betriebsmodi) abgeändert werden können. Beispielsweise können auch die Verwendungsparameter angeben in welchem Bereich die Gegenleistung abgeändert werden kann, die für eine Nutzung des Leistungsgegenstandes X erforderlich ist. Die weitere erste Nachricht wird dabei von der ersten Sendevorrichtung S1 für die Gasturbine GT an die Verarbeitungsvorrichtung V, BC übertragen.

Der erste Leistungsempfänger RX1 ruft mit einer weiteren zweiten Nachricht die Informationen über den Leistungsgegenstand ab. Anhand dieser Informationen sendet der erste Leistungsempfänger RX1 eine Anfragenachricht mit der weiteren dritten Nachricht an die Verarbeitungsvorrichtung V, BC. Die Anfragenachricht umfasst dabei weitere Verwendungsparameter, die angeben wie das Kraftwerk PP die Gasturbine GT einsetzen möchte bzw. welcher Betriebsmodus gewünscht ist und welche weiteren Verwendungsparameter (z. B. welche Kühlleistung zum Kühlen der Gasturbine bereitgestellt werden kann) für die Verwendung des Leistungsgegenstandes durch das Kraftwerk PP gelten sollen.

Anhand der weiteren Verwendungsparameter, die z. B. den gewünschten Betriebsmodus für die Gasturbine GT angeben, und der Verwendungsparameter, die die unterstützten Betriebsmodi der Gasturbine GT mit den jeweiligen Betriebsparametern angeben, wird die zu erbringende Leistung für das Kraftwerk PP/ersten Leistungsempfänger RX1 ermittelt. Die zu erbringende Leistung wird dann mittels einer Steuernachricht bzw. einer weiteren vierten Nachricht an den zweiten Leistungsempfänger übertragen. Anhand der weiteren Verwendungsparameter und der Verwendungsparameter können z. B. die Leistungsparameter berechnet werden, die während der konkreten Nutzung des Leistungsgegenstandes durch den ersten Leistungsempfänger RX1/Kraftwerk PP gelten.

Dabei können z. B. ein weiterer Datensteuerrahmen SC2 erzeugt werden, der die Einhaltung der Leistungsparameter überprüft und ggf. einen Zugriffsschutz für den Leistungsgegenstand aufhebt. Alternativ wird der Datensteuerrahmen SC1 neu konfiguriert, sodass dieser die Verwendungsparameter und/oder die Leistungsparameter während der Nutzung des Leistungsgegenstandes X durch den ersten Leistungsempfänger RX1/das Kraftwerk PP überprüft und den Zugriffsschutz auf den Betriebsmodus aufhebt, wenn die Verwendungsparameter und/oder die Leistungsparameter während der Nutzung des Leistungsgegenstandes eingehalten sind. Die Einhaltung der Leistungsparameter und/oder der Verwendungsparameter wird beispielsweise anhand von Messdaten überprüft, die z. B. mittels einer weiteren fünften Nachricht (z. B. Bestätigung der Erbringung der Gegenleistung) an die Verarbeitungsvorrichtung bzw. den Datensteuerrahmen SC1 und/oder den weiteren Datensteuerrahmen SC2 übermittelt werden.

Die Messdaten können z. B. von einem Sensor in der Kühlanlage der Gasturbine bereitgestellt werden. Dieser Sensor kann z. B. als Blockkettenorakel ausgebildet sein.

Stellt der erste Datensteuerrahmen SC1 und/oder der weitere Datensteuerrahmen SC2 fest, dass die Leistungsparameter und/oder die Verwendungsparameter eingehalten sind, wird der Zugriff auf diesen Betriebsmodus der Gasturbine GT mittels einer weiteren Nachricht M6 gewährt. Hier kann in einem einfachen Fall ein Lizenzschlüssel übermittelt werden, der für den Betrieb des entsprechenden Betriebsmodus notwendig ist. Alternativ wird über die weitere Nachricht M6 ein Steuersignal bereitgestellt, das z. B. der Gasturbine und/oder dem ersten Leistungsempfänger RX1/dem Kraftwerk PP übermittelt wird, um den entsprechenden Betriebsmodus einzuschalten.

Die Überprüfung der Leistungsparameter und/oder der Verwendungsparameter kann z. B. intervallgesteuert erfolgen (einmal täglich, stündlich oder wöchentlich) oder zu festgelegten Zeitpunkten (10. Oktober 2018, 15. November 2018, 2. Januar 2019) erfolgen und der Betriebsmodus ggf. für einen entsprechenden Zeitraum freigeschaltet werden. Dieser Zeitraum ist vorzugsweise in den Verwendungsparametern und/oder Leistungsparametern ebenfalls festgelegt.

Das System und/oder die Module und/oder die Sendevorrichtung S und/oder die Verarbeitungsvorrichtung V, BC und/oder der Leistungsempfänger RX und/oder das verteilte Datenbanksystem und/oder die Knoten des verteilten Datenbanksystems (z. B. Blockketten-Knoten) /Verarbeitungsvorrichtung/Leistungsempfänger/Sendevorrichtung und/oder Geräte können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

In weitere Varianten werden die Funktionen eines jeweiligen Moduls, mehrerer Module oder aller Module zumindest zum Teil mittels eines Smart-Contracts realisiert. Alternativ oder zusätzlich sind die Merkmale und/oder Module der Verarbeitungsvorrichtung von einem oder mehreren ersten Knoten (Knoten N1-N4) des verteilten Datenbanksystems realisiert. Es kann insbesondere ein einzelner erster Knoten der Verarbeitungsvorrichtung die jeweiligen Module einer Ausführungsform bzw. eines Ausführungsbeispiel bzw. eines seiner Varianten umfassen. Damit werden die entsprechenden Funktionalitäten z. B. redundant durch mehrere gleichartige Knoten bereitgestellt.

Ein oder mehrere Leistungsempfänger RX (z. B. die Leistungsempfänger RX1 und/oder RX2) können von einem oder mehreren zweiten Knoten des verteilten Datenbanksystems realisiert sein. Es kann insbesondere ein einzelner zweiter Knoten eines Leistungsempfänger RX die jeweiligen Module einer Ausführungsform bzw. eines Ausführungsbeispiel bzw. eines seiner Varianten umfassen. Damit werden die entsprechenden Funktionalitäten z. B. redundant durch mehrere gleichartige Knoten bereitgestellt.

Eine oder mehrere Sendevorrichtungen S (z. B. die Sendevorrichtungen S1 und/oder S2) können von einem oder mehreren dritten Knoten des verteilten Datenbanksystems realisiert sein. Es kann insbesondere ein einzelner dritter Knoten einer Sendevorrichtungen S die jeweiligen Module einer Ausführungsform bzw. eines Ausführungsbeispiel bzw. eines seiner Varianten umfassen. Damit werden die entsprechenden Funktionalitäten z. B. redundant durch mehrere gleichartige Knoten bereitgestellt.

Die Kommunikation der Nachrichten (z. B. Nachricht M1 bis M7) kann zum Teil (z. B. Nachrichten M1 - M5 oder Nachrichten M1 - M6) oder vollständig (z. B. Nachricht M1 bis M7) als Transaktionen des verteilten Datenbanksystems realisiert werden. Das verteilte Datenbanksystem kann dabei z. B. als Blockkette ausgebildet sein und die Nachrichten können ganz oder teilweise mittels eines Datenreplikationsmechanismus der Blockkette an die entsprechenden Knoten (z. B. erste Knoten, zweite Knoten, dritte Knoten) des verteilten Datenbanksystems übermittelt werden. Entsprechende Transaktionen können nach deren Validierung entsprechend in Datenblöcken oder Blöcken des verteilten Datenbanksystems/der Blockkette gespeichert und/oder mit diesen übermittelt werden.

In weiteren Varianten der Ausführungsbeispiele kann ein Teil von Knoten, die eine Sendevorrichtung und/oder eine Verarbeitungsvorrichtung und/oder einen Leistungsempfänger realisieren, derart eingerichtet sein,

In weiteren Varianten der Ausführungsbeispiele kann z. B. die Verarbeitungsvorrichtung mittels verschiedener Knoten des verteilten Datenbanksystems realisiert werden. Dabei realisieren die verschiedenen Knoten z. B. bestimmte Funktionen des verteilten Datenbanksystems. Beispielsweise kann von einen solchen Knoten die Funktionalität des Speichermoduls realisiert werden. Durch einen anderen Knoten kann z. B. das Bereitstellungsmodul realisiert werden usw. Auf analoge Weise können die Sendevorrichtung und/oder der Leistungsempfänger realisiert werden. Vorteilhaft dabei ist, dass Funktionalitäten, die hoch verfügbar sein sollen, redundant von mehreren Knoten ausgebildet werden können.

Alternativ können die erläuterten Ausführungsbeispiele mittels eines Peer-2-Peer Kommunikationsprotokolls anstelle des verteilten Datenbanksystems realisiert werden. Dabei sind die genannten Nachrichten/Transaktionen des verteilten Datenbanksystems entsprechende Nachrichten des Peer-2-Peer Kommunikationsprotokolls. Dabei ist beispielsweise unter einem Speichern der Transaktionen in dem verteilten Datenbanksystem ein Übergeben einer entsprechenden Nachricht an die Peer-2-Peer Kommunikationsinfrastruktur, die das Peer-2-Peer Kommunikationsprotokoll implementiert, zu verstehen. Auch kann beispielsweise anstelle des verteilten Datenbanksystems eine Peer-2-Peer Schnittstelle oder eine Peer-2-Peer Applikation genutzt werden, um die entsprechenden Transaktionen bzw. Nachrichten zu speichern und/oder zu übermitteln.

In weiteren Varianten der genannten Ausführungsbeispiele umfasst eine/die Sendevorrichtung einen Optimierer. Mittels des Optimierers können beispielsweise die Verwendungsparameter anhand eines vorgegebenen Kriteriums optimiert werden. Beispielsweise können mittels des vorgegebenen Kriteriums die Verwendungsparameter hinsichtlich ihrer Nutzungsdauer optimiert werden. Ist beispielsweise bekannt zu welchen Zeitpunkten ein Leistungsgegenstand in Form von Sensordaten bereitgestellt werden kann, kann der Nutzungszeitraum für die Sensordaten derart gewählt werden, dass z. B. der Nutzungszeitraum abläuft, wenn neue Sensordaten verfügbar sind.

Beispielsweise werden die Sensordaten täglich um 13:00 Uhr erfasst. Die Nutzungsdauer wird durch den Optimierer anhand dieses regelmäßigen Sensordatenerfassungsintervalls festgelegt. Ändert sich das Sensordatenerfassungsintervall (z. B. werden die Sensordaten alle zwei Tage erfasst) so passt der Optimierer die Verwendungsparameter derart an, dass die Nutzungsdauer diesem neuen Sensordatenerfassungsintervall entspricht, wobei z. B. der Beginn der Nutzungsdauer durch den Erfassungszeitpunkt bestimmt wird.

Auf ähnliche Weise kann beispielsweise der Betriebsmodus der Gasturbine optimiert werden. Beispielsweise erfasst der Optimierer die Auslastung der Gasturbine mittels eines Sensors. Anhand dieser Daten kann der Optimierer dann beispielsweise aktuell mögliche Betriebsmodi für die Gasturbine berechnen, um z. B. zu verhindern, dass die Gasturbine zu stark abkühlt oder um zu verhindern, dass ein Betriebsmodus für die Gasturbine als Leistungsgegenstand in Kombination Verwendungsparameter angegeben wird, der einen unerwünscht hohen Verschleiß zu Folge hat. Dies kann beispielsweise relevant sein, wenn die Gasturbine bereits stark abgekühlt ist. Ein Betriebsmodus der Gasturbine mit sehr hoher Auslastung innerhalb kurzer Zeit würde die Gasturbine ggf. starken Belastungen aussetzen, die mit einem hohen Verschleiß einhergehen. Entsprechend kann der Optimierer Betriebsmodi mittels Verwendungsparameter und den Leistungsgegenstand anbieten, die ein Anfahren der Gasturbine aus einem abgekühlten Zustand derart steuert, dass die Gasturbine möglichst wenig verschleißt. Entsprechend kann beispielsweise in den Verwendungsparameter eine bestimmte Kühlleistung für einen Leistungsgegenstand in Form von ausgewählten Betriebsmodi der Gasturbine vorgeben werden, wobei der Optimierer die Kühlleistung und die entsprechenden Betriebsmodi derart auswählt, dass der Verschleiß minimiert wird.

Mit anderen Worten ist hier das Optimierungskriterium den Verschleiß der Gasturbine zu minimieren. Wie bereits erläutert kann der Optimierer nicht nur die Verwendungsparameter optimieren sondern ggf. auch den Leistungsgegenstand.

In weiteren Varianten der genannten Ausführungsbeispiele umfasst eine/die Verarbeitungsvorrichtung einen Optimierer. Mittels des Optimierers können beispielsweise die Leistungsparameter oder die zu erbringende Leistung anhand eines vorgegebenen Kriteriums optimiert werden. Die Optimierung kann dabei ähnlich realisiert sein wie bereits oben erläutert.

Beispielsweise können mittels des vorgegebenen Kriteriums die die Leistungsparameter und/oder die zu erbringende Leistung hinsichtlich ihrer Nutzungsdauer optimiert werden. Ist beispielsweise bekannt zu welchen Zeitpunkten ein Leistungsgegenstand in Form von Sensordaten bereitgestellt werden kann, kann der tatsächlich genutzte Nutzungszeitraum für die Sensordaten derart gewählt werden, dass z. B. der Nutzungszeitraum abläuft, wenn neue Sensordaten verfügbar sind. Beispielsweise werden die Sensordaten täglich um 13:00 Uhr erfasst, wobei die Verwendungsparameter eine Nutzungsdauer von einer Woche erlauben. Die Nutzungsdauer wird durch den Optimierer anhand dieses regelmäßigen Sensordatenerfassungsintervalls festgelegt (z. B. 24h). Ändert sich das Sensordatenerfassungsintervall (z. B. werden die Sensordaten alle zwei Tage erfasst) so passt der Optimierer die Leistungsparameter bzw. die zu erbringende Leistung derart an, dass die Nutzungsdauer diesem neuen Sensordatenerfassungsintervall entspricht, wobei hierbei ggf. die weiteren Verwendungsparameter des Leistungsempfängers ebenfalls berücksichtigt werden.

In weiteren Varianten der genannten Ausführungsbeispiele umfasst ein/der Leistungsempfänger einen Optimierer. Mittels des Optimierers können beispielsweise die Leistungsparameter oder die zu erbringende Leistung anhand eines vorgegebenen Kriteriums optimiert werden. Die Optimierung kann dabei ähnlich realisiert sein wie bereits oben erläutert.

Beispielsweise können mittels des vorgegebenen Kriteriums die Verwendungsparameter hinsichtlich ihrer Nutzungsdauer optimiert werden. Ist beispielsweise bekannt zu welchen Zeitpunkten ein Leistungsgegenstand in Form von Sensordaten bereitgestellt werden kann, kann der Nutzungszeitraum für die Sensordaten derart gewählt werden, dass z. B. der Nutzungszeitraum abläuft, wenn neue Sensordaten verfügbar sind. Dies kann der Leistungsempfänger/Optimierer anhand der Informationen, die von dem Bereitstellungsmodul bereitgestellt werden, berechnen.

Beispielsweise werden die Sensordaten täglich um 13:00 Uhr erfasst, wobei die Verwendungsparameter/Leistungsgegenstandseigenschaften eine Nutzungsdauer von einer Woche erlauben. Die Nutzungsdauer wird durch den Optimierer anhand dieses regelmäßigen Sensordatenerfassungsintervalls festgelegt (z. B. 24h) und in den weiteren Verwendungsparametern festgelegt/gespeichert, die dann an die Verarbeitungsvorrichtung gesendet werden. Ändert sich das Sensordatenerfassungsintervall (z. B. werden die Sensordaten alle zwei Tage erfasst) so passt der Optimierer die Leistungsparameter bzw. die zu erbringende Leistung derart an, dass die Nutzungsdauer diesem neuen Sensordatenerfassungsintervall entspricht, wobei diese Änderung/Optimierung dann in den entsprechenden weiteren Verwendungsparametern gespeichert werden, die dann an die Verarbeitungsvorrichtung übermittelt werden. Anhand dieser neuen geänderten weiteren Verwendungsparameter ermittelt dann z. B. die Verarbeitungsvorrichtung eine neue zu erbringende Leistung von dem Leistungsempfänger. Wobei in einem solchen Fall beispielsweise die zu erbringende Leistung das Bereitstellen von Nutzungszeitpunkten des Leistungsgegenstandes ist oder ein Zugriff auf eine Schnittstelle (z. B. eine Datenschnittstelle zu einem Sensor) erlaubt wird, die eine derartige Erfassung von Nutzungszeitpunkten erlaubt. Die erbrachte Leistung ist in einem solchen Fall z. B. das tatsächliche Bereitstellen der Nutzungszeitpunkte oder der tatsächliche Zugriff auf die Schnittstelle.

Die erbrachte Leistung wird beispielsweise in diesem oder anderen Ausführungsbeispielen dem Datensteuerrahmen übermittelt, sodass dieser ggf. den Zugriffsschutz bei Einhaltung der Verwendungsparameter und/oder Leistungsparameter aufheben kann. Diese Übermittlung an den Datensteuerrahmen kann beispielsweise durch die Infrastruktur des verteilten Datenbanksystems erfolgen, einem separaten Kommunikationskanal oder durch die Verarbeitungsvorrichtung.

Die Fig. 5 zeigt ein weiteres Ausführungsbeispiel der Erfindung als Ablaufdiagramm für ein Verfahren.

Das Verfahren ist vorzugsweise rechnergestützt realisiert.

Im Einzelnen wird in diesem Ausführungsbeispiel ein Verfahren zum rechnergestützten Senden von Nachrichten (z. B. eines Datensteuerrahmens) realisiert.

Das Verfahren umfasst einen ersten Verfahrensschritt 510 zum Erzeugen von Verwendungsparametern für den Leistungsgegenstand.

Das Verfahren umfasst einen zweiten Verfahrensschritt 520 zum Konfigurieren und/oder Erzeugen eines Datensteuerrahmens, wobei
- der Datensteuerrahmen den Leistungsgegenstand umfasst,
- eine Verwendbarkeit des Leistungsgegenstands mittels eines Zugriffschutzes durch den Datensteuerrahmen gesteuert wird;
- der Datensteuerrahmen die Verwendungsparameter umfasst, wobei die Verwendungsparameter angeben wann der Zugriffschutz zur Verwendung des Leistungsgegenstands aufgehoben wird;

Das Verfahren umfasst einen dritten Verfahrensschritt 530 zum Senden des Datensteuerrahmens.

Die Fig. 6 zeigt ein weiteres Ausführungsbeispiel der Erfindung als ein Ablaufdiagramm für ein Verfahren.

Das Verfahren ist vorzugsweise rechnergestützt realisiert.

Im Einzelnen wird in diesem Ausführungsbeispiel ein Verfahren zum rechnergestützten Verarbeiten von Nachrichten (z. B. eines Datensteuerrahmens) dargestellt.

Das Verfahren umfasst einen ersten Verfahrensschritt 610 zum Empfangen eines Datensteuerrahmens, wobei
- der Datensteuerrahmen einen Leistungsgegenstand umfasst,
- eine Verwendbarkeit des Leistungsgegenstands mittels eines Zugriffsschutzes durch den Datensteuerrahmen gesteuert wird,
- der Datensteuerrahmen Verwendungsparameter über eine Verwendung des Leistungsgegenstandes umfass,
- die Verwendungsparameter wann der Zugriffsschutz zur Verwendung des Leistungsgegenstands aufgehoben wird;

Das Verfahren umfasst einen zweiten Verfahrensschritt 620 zum Speichern des Datensteuerrahmens in einem Datenbanksystem, wobei
- der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
- beispielsweise der Datensteuerrahmen dazu eingerichtet ist den Zugriffsschutz abhängig von einem Prüfergebnis über die Einhaltung der der Verwendungsparameter aufzuheben.

Die Fig. 8 zeigt ein weiteres Ausführungsbeispiel der Erfindung als ein Ablaufdiagramm für ein Verfahren.

Das Verfahren ist vorzugsweise rechnergestützt realisiert.

Im Einzelnen wird in diesem Ausführungsbeispiel ein Verfahren zum rechnergestützten Empfangen von Nachrichten dargestellt.

Das Verfahren umfasst einen ersten Verfahrensschritt 810 zum Empfangen von Informationen über einen Leistungsgegenstand und/oder einen Verwendungsrahmen, wobei
- ein Bereitstellen des Leistungsgegenstandes für den Leistungsempfänger mittels einer Anfragenachricht und einer Steuernachricht gesteuert wird.

Das Verfahren umfasst einen zweiten Verfahrensschritt 820 zum Empfangen eines Datensteuerrahmens, wobei
- der Datensteuerrahmen den Leistungsgegenstand umfasst,
- eine Verwendbarkeit des Leistungsgegenstands mittels eines Zugriffsschutzes durch den Datensteuerrahmen gesteuert wird,
- der Datensteuerrahmen Verwendungsparameter über eine Verwendung des Leistungsgegenstandes umfasst,
- die Verwendungsparameter angeben wann der Zugriffsschutz zur Verwendung des Leistungsgegenstands aufgehoben wird.

Mit anderen Worten betrifft die Erfindung ein Ökosystem von Geräten (z. B. Sendevorrichtungen, Verarbeitungsvorrichtung, Leistungsempfänger), die mittels einer Blockkette miteinander autonom interagieren. Die Geräte sind vorzugsweise mittels der Blockketteninfrastruktur kommunikativ miteinander gekoppelt/verbunden. Dabei können Sendevorrichtungen Sensordaten oder Betriebsmodi eines Gerätes in Form eines Leistungsgegenstandes bereitstellen, wobei die Sendevorrichtung die Verwendung des Leistungsgegenstandes mittels Verwendungsparameter steuert. Die Blockketteninfrastruktur der Blockkette erlaubt dabei insbesondere die Einhaltung dieser Verwendungsparameter dezentral sicherzustellen, indem z. B. ein Datensteuerrahmen die Einhaltung der Verwendungsparameter überwacht.

Nachfolgend werden weitere Ausführungsbeispiele erläutert, die nicht spezifisch in Figuren dargestellt wurden:
Ein weiteres Ausführungsbeispiel betrifft eine Sendevorrichtung zum Bereitstellen eines Leistungsgegenstands umfassend:
- beispielsweise ein Kodierungsmodul, wobei
   - beispielsweise das Kodierungsmodul dazu eingerichtet ist Verwendungsparameter für den Leistungsgegenstand zu erzeugen,
- beispielsweise ein Steuermodul, wobei
   - beispielsweise das Steuermodul dazu eingerichtet ist einen Datensteuerrahmen zu erzeugen und/oder zu konfigurieren,
   - beispielsweise der Datensteuerrahmen den Leistungsgegenstand umfasst,
   - beispielsweise eine Verwendbarkeit des Leistungsgegenstands mittels eines Zugriffschutzes durch den Datensteuerrahmen gesteuert wird;
   - beispielsweise der Datensteuerrahmen den Verwendungsparameter umfasst, wobei die Verwendungsparameter angeben wann der Zugriffschutz zur Verwendung des Leistungsgegenstands aufgehoben wird;
- beispielsweise eine erste Datenschnittstelle, wobei
   - beispielsweise die erste Datenschnittstelle den Datensteuerrahmen sendet,
   - der Datensteuerrahmen beispielsweise an ein verteiltes Datenbanksystem gesendet wird.

Ein weiteres Ausführungsbeispiel betrifft einen Knoten eines verteilten Datenbanksystems oder einer Peer-2-Peer Applikation/Infrastruktur zum Bereitstellen eines Leistungsgegenstands umfassend:
- beispielsweise ein Kodierungsmodul, wobei
   - beispielsweise das Kodierungsmodul dazu eingerichtet ist Verwendungsparameter für den Leistungsgegenstand zu erzeugen,
- beispielsweise ein Steuermodul, wobei
   - beispielsweise das Steuermodul dazu eingerichtet ist einen Datensteuerrahmen zu erzeugen und/oder zu konfigurieren,
   - beispielsweise der Datensteuerrahmen den Leistungsgegenstand umfasst,
   - beispielsweise eine Verwendbarkeit des Leistungsgegenstands mittels eines Zugriffschutzes durch den Datensteuerrahmen gesteuert wird;
   - beispielsweise der Datensteuerrahmen den Verwendungsparameter umfasst, wobei die Verwendungsparameter angeben wann der Zugriffschutz zur Verwendung des Leistungsgegenstands aufgehoben wird;
- beispielsweise eine erste Datenschnittstelle, wobei
   - beispielsweise die erste Datenschnittstelle den Datensteuerrahmen sendet,
   - der Datensteuerrahmen beispielsweise an ein verteiltes Datenbanksystem gesendet wird.

Dieses Ausführungsbeispiel realisiert beispielsweise eine Sendevorrichtung als Knoten oder als Peer-2-Peer Applikation.

Ein weiteres Ausführungsbeispiel betrifft eine Verarbeitungsvorrichtung umfassend:
- beispielsweise eine zweite Datenschnittstelle, wobei
   - beispielsweise die zweite Datenschnittstelle einen Datensteuerrahmen empfängt,
   - beispielsweise der Datensteuerrahmen einen Leistungsgegenstand umfasst,
   - beispielsweise eine Verwendbarkeit des Leistungsgegenstands mittels eines Zugriffsschutzes durch den Datensteuerrahmen gesteuert wird,
   - beispielsweise der Datensteuerrahmen Verwendungsparameter über eine Verwendung des Leistungsgegenstandes umfass,
   - beispielsweise die Verwendungsparameter wann der Zugriffsschutz zur Verwendung des Leistungsgegenstands aufgehoben wird;
- beispielsweise ein Speichermodul, wobei
   - beispielsweise das Speichermodul dazu eingerichtet ist den Datensteuerrahmen in einem Datenbanksystem zu speichern,
   - beispielsweise der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
   - beispielsweise der Datensteuerrahmen dazu eingerichtet ist den Zugriffsschutz abhängig von einem Prüfergebnis über die Einhaltung der der Verwendungsparameter aufzuheben.

Ein weiteres Ausführungsbeispiel betrifft einen Knoten eines verteilten Datenbanksystems oder einer Peer-2-Peer Applikation/Infrastruktur umfassend:
- beispielsweise eine zweite Datenschnittstelle, wobei
   - beispielsweise die zweite Datenschnittstelle einen Datensteuerrahmen empfängt,
   - beispielsweise der Datensteuerrahmen einen Leistungsgegenstand umfasst,
   - beispielsweise eine Verwendbarkeit des Leistungsgegenstands mittels eines Zugriffsschutzes durch den Datensteuerrahmen gesteuert wird,
   - beispielsweise der Datensteuerrahmen Verwendungsparameter über eine Verwendung des Leistungsgegenstandes umfass,
   - beispielsweise die Verwendungsparameter wann der Zugriffsschutz zur Verwendung des Leistungsgegenstands aufgehoben wird;
- beispielsweise ein Speichermodul, wobei
   - beispielsweise das Speichermodul dazu eingerichtet ist den Datensteuerrahmen in einem Datenbanksystem (z. B. der Datenbank DB aus Fig. 1 oder ein verteiltes Datenbanksystem) zu speichern,
   - beispielsweise der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
   - beispielsweise der Datensteuerrahmen dazu eingerichtet ist den Zugriffsschutz abhängig von einem Prüfergebnis über die Einhaltung der der Verwendungsparameter aufzuheben.

Dieses Ausführungsbeispiel realisiert beispielsweise eine Verarbeitungsvorrichtung als Knoten oder als Peer-2-Peer Applikation.

Ein weiteres Ausführungsbeispiel betrifft einen Leistungsempfänger umfassend:
- beispielsweise ein Kommunikationsmodul, wobei
   - beispielsweise das Kommunikationsmodul dazu eingerichtet ist Informationen über einen Leistungsgegenstand und/oder einen Verwendungsrahmen zu empfangen,
   - beispielsweise ein Bereitstellen des Leistungsgegenstandes für den Leistungsempfänger mittels einer Anfragenachricht und einer Steuernachricht gesteuert wird;
- beispielsweise ein Leistungsempfangsmodul, wobei
   - beispielsweise das Leistungsempfangsmodul einen Datensteuerrahmen empfängt,
   - beispielsweise der Datensteuerrahmen den Leistungsgegenstand umfasst,
   - beispielsweise eine Verwendbarkeit des Leistungsgegenstands mittels eines Zugriffsschutzes durch den Datensteuerrahmen gesteuert wird,
   - beispielsweise der Datensteuerrahmen Verwendungsparameter über eine Verwendung des Leistungsgegenstandes umfasst,
   - beispielsweise die Verwendungsparameter angeben wann der Zugriffsschutz zur Verwendung des Leistungsgegenstands aufgehoben wird;

Ein weiteres Ausführungsbeispiel betrifft einen Knoten eines verteilten Datenbanksystems oder einer Peer-2-Peer Applikation/Infrastruktur zum Bereitstellen eines Leistungsgegenstands umfassend:
- beispielsweise ein Kommunikationsmodul, wobei
   - beispielsweise das Kommunikationsmodul dazu eingerichtet ist Informationen über einen Leistungsgegenstand und/oder einen Verwendungsrahmen zu empfangen,
   - beispielsweise ein Bereitstellen des Leistungsgegenstandes für den Leistungsempfänger mittels einer Anfragenachricht und einer Steuernachricht gesteuert wird;
- beispielsweise ein Leistungsempfangsmodul, wobei
   - beispielsweise das Leistungsempfangsmodul einen Datensteuerrahmen empfängt,
   - beispielsweise der Datensteuerrahmen den Leistungsgegenstand umfasst,
   - beispielsweise eine Verwendbarkeit des Leistungsgegenstands mittels eines Zugriffsschutzes durch den Datensteuerrahmen gesteuert wird,
   - beispielsweise der Datensteuerrahmen Verwendungsparameter über eine Verwendung des Leistungsgegenstandes umfasst,
   - beispielsweise die Verwendungsparameter angeben wann der Zugriffsschutz zur Verwendung des Leistungsgegenstands aufgehoben wird;

Dieses Ausführungsbeispiel realisiert beispielsweise einen Leistungsempfänger als Knoten oder als Peer-2-Peer Applikation.

Ein weiteres Ausführungsbeispiel betrifft ein System umfassend:
- eine Sendevorrichtung nach einem der Ansprüche 1 - 5 oder 17,
   - einen Leistungsempfänger nach einem der Ansprüche 14 - 17
   - eine Verarbeitungsvorrichtung nach einem der Ansprüche 6 - 13 oder 17, wobei die Sendevorrichtung und/oder die Verarbeitungsvorrichtung und/oder der Leistungsempfänger über ein erstes Kommunikationsnetzwerk und/oder ein zweites Kommunikationsnetzwerk kommunikativ miteinander verbunden sind.

Ein weiteres Ausführungsbeispiel betrifft ein System, umfassend:
- beispielsweise eine Sendevorrichtung (S, S1, S2) zum Bereitstellen eines Leistungsgegenstands (X) umfassend:
   - beispielsweise ein Kodierungsmodul (310), wobei
      - beispielsweise das Kodierungsmodul (310) dazu eingerichtet ist Verwendungsparameter für den Leistungsgegenstand zu erzeugen,
   - beispielsweise ein Steuermodul (320), wobei
      - beispielsweise das Steuermodul (320) dazu eingerichtet ist einen Datensteuerrahmen (SC1) zu erzeugen und/oder zu konfigurieren,
      - beispielsweise der Datensteuerrahmen (SC1) den Leistungsgegenstand (X) umfasst,
      - beispielsweise eine Verwendbarkeit des Leistungsgegenstands (X) mittels eines Zugriffschutzes durch den Datensteuerrahmen (SC1) gesteuert wird;
      - beispielsweise der Datensteuerrahmen (SC1) den Verwendungsparameter umfasst, wobei die Verwendungsparameter angeben wann der Zugriffschutz zur Verwendung des Leistungsgegenstands (X) aufgehoben wird;
   - beispielsweise eine erste Datenschnittstelle (330), wobei
      - beispielsweise die erste Datenschnittstelle (330) den Datensteuerrahmen (SC1) sendet,
      - beispielsweise der Datensteuerrahmen (SC1) beispielsweise an ein verteiltes Datenbanksystem gesendet wird,
      - beispielsweise die Sendevorrichtung (S) beispielsweise eine Sendevorrichtung nach einem der Ansprüche 1 - 5 oder 17 ist;
- beispielsweise Verarbeitungsvorrichtung (V) umfassend:
   - beispielsweise eine zweite Datenschnittstelle (420), wobei
      - beispielsweise die zweite Datenschnittstelle (420) einen Datensteuerrahmen (SC1) empfängt,
      - beispielsweise der Datensteuerrahmen (SC1) einen Leistungsgegenstand (X) umfasst,
      - beispielsweise eine Verwendbarkeit des Leistungsgegenstands (X) mittels eines Zugriffsschutzes durch den Datensteuerrahmen (SC1) gesteuert wird,
      - beispielsweise der Datensteuerrahmen (SC1) Verwendungsparameter über eine Verwendung des Leistungsgegenstandes (X) umfasst,
      - beispielsweise die Verwendungsparameter angeben, wann der Zugriffsschutz zur Verwendung des Leistungsgegenstands (X) aufgehoben wird;
   - beispielsweise ein Speichermodul (410), wobei
      - beispielsweise das Speichermodul (410) dazu eingerichtet ist den Datensteuerrahmen (SC1) in einem Datenbanksystem (DB, BC) zu speichern,
      - beispielsweise der Datensteuerrahmen (SC1) dazu eingerichtet ist bei einer Verwendung des Leistungsgegenstandes (X) durch die Verarbeitungsvorrichtung (V) oder einen Leistungsempfänger (RX, RX1, RX2) eine Einhaltung der Verwendungsparameter zu überprüfen,
      - beispielsweise der Datensteuerrahmen (SC1) dazu eingerichtet ist den Zugriffsschutz abhängig von einem Prüfergebnis über die Einhaltung der der Verwendungsparameter aufzuheben,
      - beispielsweise die Verarbeitungsvorrichtung (V) beispielsweise eine Verarbeitungsvorrichtung nach einem der Ansprüche 6 - 13 oder 17 ist;
- beispielsweise Leistungsempfänger (RX, RX1, RX2) umfassend:
   - beispielsweise ein Kommunikationsmodul (710), wobei
      - beispielsweise das Kommunikationsmodul dazu eingerichtet ist Informationen über einen Leistungsgegenstand (X) und/oder einen Verwendungsrahmen und/oder Leistungsgegenstandseigenschaften zu empfangen,
      - beispielsweise ein Bereitstellen des Leistungsgegenstandes (X) für den Leistungsempfänger mittels einer Anfragenachricht (M3) und einer Steuernachricht (M4) gesteuert wird;
   - beispielsweise ein Leistungsempfangsmodul (720), wobei
      - beispielsweise das Leistungsempfangsmodul einen Datensteuerrahmen (SC1, SC2) empfängt,
      - beispielsweise der Datensteuerrahmen (SC1, SC2) den Leistungsgegenstand (X) umfasst,
      - beispielsweise eine Verwendbarkeit des Leistungsgegenstands (X) mittels eines Zugriffsschutzes durch den Datensteuerrahmen (SC1, SC2) gesteuert wird,
      - beispielsweise der Datensteuerrahmen (SC1, SC2) Verwendungsparameter über eine Verwendung des Leistungsgegenstandes (X) umfasst,
      - beispielsweise die Verwendungsparameter angeben wann der Zugriffsschutz zur Verwendung des Leistungsgegenstands aufgehoben wird,
      - beispielsweise der Leistungsempfänger (RX, RX1, RX2) beispielsweise ein Leistungsempfänger nach einem der Ansprüche 14 - 17 ist,
      - beispielsweise die Sendevorrichtung (S, S1, S2) und/oder die Verarbeitungsvorrichtung (V) und/oder der Leistungsempfänger (RX, RX1, RX2) über ein erstes Kommunikationsnetzwerk und/oder ein zweites Kommunikationsnetzwerk kommunikativ miteinander verbunden sind.

Diese Ausführungsbeispiele sind soweit sinnvoll möglich auch mit Ausführungsformen, Ausführungsbeispielen und Varianten von Ausführungsbeispielen kombinierbar.

In weiteren Ausführungsbeispielen sind der Leistungsempfänger und/oder die Sendevorrichtung und/oder die Verarbeitungsvorrichtung jeweils als einer oder mehrere Knoten eines verteilten Datenbanksystems ausgebildet, wobei der Leistungsempfänger und/oder die Sendevorrichtung beispielsweise auch als Blockketten-Orakel ausgebildet sein können.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Sendevorrichtung (S, S1, S2) zum Bereitstellen eines Leistungsgegenstands umfassend:
- ein Kodierungsmodul (310), wobei
- das Kodierungsmodul dazu eingerichtet ist Verwendungsparameter für den Leistungsgegenstand (X) zu erzeugen,
- ein Steuermodul (320), wobei
- das Steuermodul dazu eingerichtet ist einen Datensteuerrahmen (SC1) zu erzeugen und/oder zu konfigurieren,
- der Datensteuerrahmen (SC1) den Leistungsgegenstand umfasst,
- eine Verwendbarkeit des Leistungsgegenstands (X) mittels eines Zugriffschutzes durch den Datensteuerrahmen (SC1) gesteuert wird,
- der Datensteuerrahmen (SC1) den Verwendungsparameter umfasst, wobei die Verwendungsparameter angeben wann der Zugriffschutz zur Verwendung des Leistungsgegenstands (X) aufgehoben wird;
- eine erste Datenschnittstelle (330), wobei
- die erste Datenschnittstelle (330) den Datensteuerrahmen (SC1) sendet,
- der Datensteuerrahmen beispielsweise an ein verteiltes Datenbanksystem gesendet wird.

2. Sendevorrichtung (S, S1, S2) nach Anspruch 1, wobei
- Leistungsgegenstandseigenschaften über den Leistungsgegenstand (X) in einem Verwendungsrahmen und/oder den Verwendungsparametern und/oder dem Datensteuerrahmen (SC1) gespeichert sind,
- insbesondere der Datensteuerrahmen (SC1) den Verwendungsrahmen umfasst,
- insbesondere der Verwendungsrahmen die Verwendungsparameter umfasst.

3. Sendevorrichtung (S, S1, S2) nach Anspruch 1 oder 2, wobei
- die Sendevorrichtung (S, S1, S2) ein Knoten eines verteilten Datenbanksystems ist,
- beispielsweise der Verwendungsrahmen und/oder der Datensteuerrahmen (SC1) ein Smart-Contract ist,
- beispielsweise ein Empfänger beim Senden des Datensteuerrahmens (SC1) ein verteiltes Datenbanksystem oder ein Knoten eines verteilten Datenbanksystems ist.

4. Sendevorrichtung (S, S1, S2) nach einem der vorhergehenden Ansprüche, wobei
- die Sendevorrichtung (S, S1, S2) einen Sensor umfasst und der Leistungsgegenstand (X) Sensordaten sind,
- insbesondere Leistungsgegenstandeigenschaften über die Sensordaten in dem Verwendungsrahmen und/oder den Verwendungsparametern und/oder dem Datensteuerrahmen (SC1) gespeichert sind.

5. Sendevorrichtung (S, S1, S2) nach einem der vorhergehenden Ansprüche, wobei der Verwendungsrahmen und/oder die Verwendungsparametern und/oder der Datensteuerrahmen (SC1) einen Erzeugungsort des Leistungsgegenstands (X) umfassen und/oder einen Zielort zur Entnahme des Leistungsgegenstands (X) umfassen.

6. Verarbeitungsvorrichtung (V) umfassend:
- eine zweite Datenschnittstelle (620), wobei
- die zweite Datenschnittstelle (620) einen Datensteuerrahmen empfängt,
- der Datensteuerrahmen (SC1) einen Leistungsgegenstand (X) umfasst,
- eine Verwendbarkeit des Leistungsgegenstands (X) mittels eines Zugriffsschutzes durch den Datensteuerrahmen (SC1) gesteuert wird,
- der Datensteuerrahmen (SC1) Verwendungsparameter über eine Verwendung des Leistungsgegenstandes (X) umfasst,
- die Verwendungsparameter angeben, wann der Zugriffsschutz zur Verwendung des Leistungsgegenstands (X) aufgehoben wird;
- ein Speichermodul (610), wobei
- das Speichermodul dazu eingerichtet ist den Datensteuerrahmen (SC1) in einem Datenbanksystem (BC) zu speichern,
- der Datensteuerrahmen (SC1) dazu eingerichtet ist bei einer Verwendung des Leistungsgegenstandes (X) durch die Verarbeitungsvorrichtung (V) und/oder einen Leistungsempfänger (RX) eine Einhaltung der Verwendungsparameter zu überprüfen,
- beispielsweise der Datensteuerrahmen (SC1) dazu eingerichtet ist den Zugriffsschutz abhängig von einem Prüfergebnis über die Einhaltung der der Verwendungsparameter aufzuheben.

7. Verarbeitungsvorrichtung (V) nach Anspruch 6, wobei
- die Verarbeitungsvorrichtung (V) ein Leistungserbringungsmodul umfasst,
- eine Leistungserbringungsnachricht (M6) an einen Leistungsempfänger (RX, RX1, RX2) übermittelt wird, wenn beispielsweise eine zu erbringende Leistung vom Leistungsempfänger (RX, RX1, RX2) erbracht wurde,
- der Zugriffsschutz nach Erbringung der Leistung durch den Datensteuerrahmen (SC1) aufgehoben wird und der Datensteuerrahmen (SC1) an den Leistungsempfänger (RX, RX1, RX2) übermittelt wird.

8. Verarbeitungsvorrichtung nach Anspruch 6 oder 7, wobei
- die Verarbeitungsvorrichtung (V) ein Bereitstellungsmodul umfasst,
- das Bereitstellungsmodul dazu eingerichtet ist Informationen über den Leistungsgegenstand (X) und/oder den Verwendungsrahmen und/oder Leistungsgegenstandseigenschaften bereitzustellen.

9. Verarbeitungsvorrichtung (V) nach einem der Ansprüche 6
- 8, wobei
- die Verarbeitungsvorrichtung (V) ein Anfrageverarbeitungsmodul umfasst,
- das Anfrageverarbeitungsmodul eine Anfragenachricht (M3) mit einer Anfrage zur Erbringung einer Gegenleistung und/oder weiteren Verwendungsparametern von dem Leistungsempfänger empfängt,
- das Anfrageverarbeitungsmodul überprüft, ob die Anfrage die Verwendungsparameter und/oder die Gegenleistung und/oder weiteren Verwendungsparametern in dem abänderbaren Bereich einhält.

10. Verarbeitungsvorrichtung (V) nach einem der Ansprüche 6
- 9, wobei
- die Verarbeitungsvorrichtung (V) ein Bestimmungsmodul umfasst
- das Bestimmungsmodul für einen Leistungsempfänger (RX, RX1, RX2) eine zu erbringende Leistung für eine Verwendung des Leistungsgegenstandes (X) ermittelt,
- beispielsweise die zu erbringende Leistung anhand der vom Leistungsempfänger angegebene Verwendung unter Berücksichtigung der Verwendungsparameter und des abänderbaren Bereichs der Gegenleistung oder der weiteren Verwendungsparameter berechnet wird.

11. Verarbeitungsvorrichtung (V) nach Anspruch 9, wobei das Bestimmungsmodul bei der Berechnung der zu erbringenden Leistung das Ergebnis des Überprüfens der durch das Anfrageverarbeitungsmodul berücksichtigt.

12. Verarbeitungsvorrichtung (V) nach einem der Ansprüche 6
- 11, wobei
- der Leistungsempfänger (RX, RX1, RX2) ein Knoten eines verteilten Datenbanksystems (BC) ist, und/oder
- die Verarbeitungsvorrichtung (V) durch einen oder mehreren Knoten eines verteilten Datenbanksystems (BC) realisiert ist, und/oder
- der Leistungsgegenstand (X) Sensordaten sind.

13. Verarbeitungsvorrichtung nach einem der Ansprüche 7 - 12, wobei
- die zu erbringende Leistung mittels eines Smart-Contracts ermittelt wird.

14. Leistungsempfänger (RX, RX1, RX2) umfassend:
- ein Kommunikationsmodul (710), wobei
- das Kommunikationsmodul dazu eingerichtet ist Informationen über einen Leistungsgegenstand (X) und/oder einen Verwendungsrahmen zu empfangen,
- ein Bereitstellen des Leistungsgegenstandes (X) für den Leistungsempfänger mittels einer Anfragenachricht (M3) und einer Steuernachricht (M4) gesteuert wird;
- ein Leistungsempfangsmodul (720), wobei
- das Leistungsempfangsmodul einen Datensteuerrahmen (SC1, SC2) empfängt,
- der Datensteuerrahmen (SC1, SC2) den Leistungsgegenstand umfasst,
- eine Verwendbarkeit des Leistungsgegenstands (X) mittels eines Zugriffsschutzes durch den Datensteuerrahmen (SC1, SC2) gesteuert wird,
- der Datensteuerrahmen (SC1, SC2) Verwendungsparameter über eine Verwendung des Leistungsgegenstandes (X) umfasst,
- die Verwendungsparameter angeben, wann der Zugriffsschutz zur Verwendung des Leistungsgegenstands (X) aufgehoben wird.

15. Leistungsempfänger (RX, RX1, RX2) nach Anspruch 14, wobei
- der Leistungsempfänger (RX, RX1, RX2) ein Berechnungsmodul umfasst,
- das Berechnungsmodul dazu eingerichtet ist anhand der Informationen über den Leistungsgegenstand weitere Verwendungsparameter zu berechnen und mittels des Kommunikationsmoduls als die Anfragenachricht (M3) zu senden.

16. Leistungsempfänger (RX, RX1, RX2) nach Anspruch 15, wobei
- der Leistungsempfänger (RX, RX1, RX2) ein Leistungserbringungsmodul umfasst,
- das Leistungserbringungsmodul dazu eingerichtet ist mittels des Kommunikationsmoduls (710) die Steuernachricht (M4) als Antwort auf die Anfragenachricht (M3) zu empfangen,
- die Steuernachricht (M4) eine zu erbringende Leistung für die Verwendung des Leistungsgegenstandes (X) entsprechend der weiteren Leistungsparameter umfasst,
- beispielsweise das Leistungserbringungsmodul die zu erbringende Leistung erbringt;

17. Verarbeitungsvorrichtung nach einem der Ansprüche 6 - 13 oder eine Sendevorrichtung nach einem der Ansprüche 1 - 5 oder ein Leistungsempfänger nach einem der Ansprüche 14 - 16, wobei
- der Datensteuerrahmen (SC1, SC2) von der Sendevorrichtung mittels Transaktionen (T) eines verteilten Datenbanksystems (BC) z. B. an die Verarbeitungsvorrichtung (V) übermittelt wird, und/oder
- der Datensteuerrahmen (SC1, SC2) durch das Speichermodul der Verarbeitungsvorrichtung (V) in einem/dem verteilten Datenbanksystem (BC) gespeichert wird, und/oder
- eine Referenz zu dem Datensteuerrahmen (SC1, SC2) durch das Speichermodul (420) der Verarbeitungsvorrichtung (V) in einem/dem verteilten Datenbanksystem (BC) gespeichert wird, und/oder
- die Leistungserbringungsnachricht (M6) als Transaktion (T) z. B. als Transaktion eines/des verteilten Datenbanksystems (BC), an den Leistungsempfänger (RX, RX1, RX2) übermittelt wird, und/oder
- die Anfragenachricht (M3) als Transaktion (T), z. B. als Transaktion eines/des verteilten Datenbanksystems (BC), an die Verarbeitungsvorrichtung (V) übermittelt wird, und/oder
- die Steuernachricht (M4) als Transaktion (T), z. B. als Transaktion eines/des verteilten Datenbanksystems (BC), an den Leistungsempfänger (RX, RX1, RX2) übermittelt wird, und/oder
- beispielsweise ein entsprechendes verteiltes Datenbanksystem (BC) als Blockkette realisiert ist und wobei die Transaktionen (T) beispielsweise in Datenblöcken (B) des verteilten Datenbanksystems oder der Blockkette vorzugsweise nach erfolgreicher Validierung gespeichert werden.

18. System, umfassend:
- Sendevorrichtung (S, S1, S2) zum Bereitstellen eines Leistungsgegenstands (X) umfassend:
- ein Kodierungsmodul (310), wobei
- das Kodierungsmodul (310) dazu eingerichtet ist Verwendungsparameter für den Leistungsgegenstand zu erzeugen,
- ein Steuermodul (320), wobei
- das Steuermodul (320) dazu eingerichtet ist einen Datensteuerrahmen (SC1) zu erzeugen und/oder zu konfigurieren,
- der Datensteuerrahmen (SC1) den Leistungsgegenstand (X) umfasst,
- eine Verwendbarkeit des Leistungsgegenstands (X) mittels eines Zugriffschutzes durch den Datensteuerrahmen (SC1) gesteuert wird;
- der Datensteuerrahmen (SC1) den Verwendungsparameter umfasst, wobei die Verwendungsparameter angeben wann der Zugriffschutz zur Verwendung des Leistungsgegenstands (X) aufgehoben wird;
- eine erste Datenschnittstelle (330), wobei
- die erste Datenschnittstelle (330) den Datensteuerrahmen (SC1) sendet,
- der Datensteuerrahmen (SC1) beispielsweise an ein verteiltes Datenbanksystem gesendet wird,
- die Sendevorrichtung (S) beispielsweise eine Sendevorrichtung nach einem der Ansprüche 1 - 5 oder 17 ist;
- Verarbeitungsvorrichtung (V) umfassend:
- eine zweite Datenschnittstelle (420), wobei
- die zweite Datenschnittstelle (420) einen Datensteuerrahmen (SC1) empfängt,
- der Datensteuerrahmen (SC1) einen Leistungsgegenstand (X) umfasst,
- eine Verwendbarkeit des Leistungsgegenstands (X) mittels eines Zugriffsschutzes durch den Datensteuerrahmen (SC1) gesteuert wird,
- der Datensteuerrahmen (SC1) Verwendungsparameter über eine Verwendung des Leistungsgegenstandes (X) umfasst,
- die Verwendungsparameter angeben, wann der Zugriffsschutz zur Verwendung des Leistungsgegenstands (X) aufgehoben wird;
- ein Speichermodul (410), wobei
- das Speichermodul (410) dazu eingerichtet ist den Datensteuerrahmen (SC1) in einem Datenbanksystem (DB, BC) zu speichern,
- der Datensteuerrahmen (SC1) dazu eingerichtet ist bei einer Verwendung des Leistungsgegenstandes (X) durch die Verarbeitungsvorrichtung (V) oder einen Leistungsempfänger (RX, RX1, RX2) eine Einhaltung der Verwendungsparameter zu überprüfen,
- beispielsweise der Datensteuerrahmen (SC1) dazu eingerichtet ist den Zugriffsschutz abhängig von einem Prüfergebnis über die Einhaltung der der Verwendungsparameter aufzuheben,
- beispielsweise die Verarbeitungsvorrichtung (V) beispielsweise eine Verarbeitungsvorrichtung nach einem der Ansprüche 6 - 13 oder 17 ist;
- Leistungsempfänger (RX, RX1, RX2) umfassend:
- ein Kommunikationsmodul (710), wobei
- das Kommunikationsmodul dazu eingerichtet ist Informationen über einen Leistungsgegenstand (X) und/oder einen Verwendungsrahmen und/oder Leistungsgegenstandseigenschaften zu empfangen,
- ein Bereitstellen des Leistungsgegenstandes (X) für den Leistungsempfänger mittels einer Anfragenachricht (M3) und einer Steuernachricht (M4) gesteuert wird;
- ein Leistungsempfangsmodul (720), wobei
- das Leistungsempfangsmodul einen Datensteuerrahmen (SC1, SC2) empfängt,
- der Datensteuerrahmen (SC1, SC2) den Leistungsgegenstand (X) umfasst,
- eine Verwendbarkeit des Leistungsgegenstands (X) mittels eines Zugriffsschutzes durch den Datensteuerrahmen (SC1, SC2) gesteuert wird,
- der Datensteuerrahmen (SC1, SC2) Verwendungsparameter über eine Verwendung des Leistungsgegenstandes (X) umfasst,
- die Verwendungsparameter angeben wann der Zugriffsschutz zur Verwendung des Leistungsgegenstands aufgehoben wird,
- der Leistungsempfänger (RX, RX1, RX2) beispielsweise ein Leistungsempfänger nach einem der Ansprüche 14 - 17 ist,
- die Sendevorrichtung (S, S1, S2) und/oder die Verarbeitungsvorrichtung (V) und/oder der Leistungsempfänger (RX, RX1, RX2) über ein erstes Kommunikationsnetzwerk und/oder ein zweites Kommunikationsnetzwerk kommunikativ miteinander verbunden sind.

19. Verfahren zum rechnergestützten Senden mit folgenden Verfahrensschritten:
- Erzeugen (510) von Verwendungsparametern für den Leistungsgegenstand,
- Konfigurieren (520) und/oder Erzeugen eines Datensteuerrahmens, wobei
- der Datensteuerrahmen den Leistungsgegenstand umfasst,
- eine Verwendbarkeit des Leistungsgegenstands mittels eines Zugriffschutzes durch den Datensteuerrahmen gesteuert wird;
- der Datensteuerrahmen die Verwendungsparameter umfasst, wobei die Verwendungsparameter angeben wann der Zugriffschutz zur Verwendung des Leistungsgegenstands aufgehoben wird;
- Senden (530) des Datensteuerrahmens.

20. Verfahren zum rechnergestützten Verarbeiten mit folgenden Verfahrensschritten:
- Empfangen (610) eines Datensteuerrahmens, wobei
- der Datensteuerrahmen einen Leistungsgegenstand umfasst,
- eine Verwendbarkeit des Leistungsgegenstands mittels eines Zugriffsschutzes durch den Datensteuerrahmen gesteuert wird,
- der Datensteuerrahmen Verwendungsparameter über eine Verwendung des Leistungsgegenstandes umfass,
- die Verwendungsparameter wann der Zugriffsschutz zur Verwendung des Leistungsgegenstands aufgehoben wird;
- Speichern (620) des Datensteuerrahmens in einem Datenbanksystem, wobei
- der Datensteuerrahmen dazu eingerichtet ist bei einer Verwendung des Leistungsgegenstandes durch die Verarbeitungsvorrichtung und/oder einen Leistungsempfänger eine Einhaltung der Verwendungsparameter zu überprüfen,
- beispielsweise der Datensteuerrahmen dazu eingerichtet ist den Zugriffsschutz abhängig von einem Prüfergebnis über die Einhaltung der der Verwendungsparameter aufzuheben.

21. Verfahren zum rechnergestützten Empfangen mit folgenden Verfahrensschritten:
- Empfangen (810) von Informationen über einen Leistungsgegenstand und/oder einen Verwendungsrahmen, wobei
- ein Bereitstellen des Leistungsgegenstandes für den Leistungsempfänger mittels einer Anfragenachricht und einer Steuernachricht gesteuert wird;
- Empfangen (820) eines Datensteuerrahmens, wobei
- der Datensteuerrahmen den Leistungsgegenstand umfasst,
- eine Verwendbarkeit des Leistungsgegenstands mittels eines Zugriffsschutzes durch den Datensteuerrahmen gesteuert wird,
- der Datensteuerrahmen Verwendungsparameter über eine Verwendung des Leistungsgegenstandes umfasst,
- die Verwendungsparameter angeben wann der Zugriffsschutz zur Verwendung des Leistungsgegenstands aufgehoben wird.

22. Computerprogrammprodukt mit Programmbefehlen zur Durchführung des Verfahrens nach einem der Ansprüche19-21.

23. Bereitstellungsvorrichtung für das Computerprogrammprodukt nach Anspruch 22, wobei die Bereitstellungsvorrichtung das Computerprogrammprodukt speichert und/oder bereitstellt.
